# EUROPÄISCHE PATENTSCHRIFT

(11) **EP 3 502 810 B1**
(45) Veröffentlichungstag und Bekanntmachung des Hinweises auf die Patenterteilung: **08.09.2021**
(21) Anmeldenummer: 17208608.4
(22) Anmeldetag: 19.12.2017
(51) Int. Cl.: G05B 19/042

(54) **VERFAHREN UND VORRICHTUNG ZUR AUTOMATISCHEN KONFIGURATION EINES AUSTAUSCHFELDGERÄTS IN EINEM PROZESSLEITSYSTEM**
METHOD AND DEVICE FOR THE AUTOMATIC CONFIGURATION OF AN EXCHANGE FIELD DEVICE IN A PROCESS CONTROL SYSTEM
PROCÉDÉ ET DISPOSITIF DE CONFIGURATION AUTOMATIQUE D'UN APPAREIL DE CHAMP DE REMPLACEMENT DANS UN SYSTÈME DE COMMANDE DE PROCESSUS

(43) Veröffentlichungstag der Anmeldung: 26.06.2019
(73) Patentinhaber: Bürkert Werke GmbH & Co. KG, 74653 Ingelfingen (DE)
(72) Erfinder: Schmötzer, Ralf, 74677 Hohebach (DE)
(74) Vertreter: Prinz & Partner mbB

(56) Entgegenhaltungen:
- DE-A1-102009 028 655
- DE-A1-102012 102 518
- LARS DUERKOP ET AL: "Towards autoconfiguration of industrial automation systems: A case study using Profinet IO", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17. September 2012 (2012-09-17), Seiten 1-8, XP032350194, DOI: 10.1109/ETFA.2012.6489654 ISBN: 978-1-4673-4735-8
- 11 Oktober ET AL: "Session: 7 Autokonfiguration von Multiprotokoll-I/O Modulen nach einem Gerätetausch (TURCK Electronics)", , 11. Oktober 2017 (2017-10-11), XP055457699, Gefunden im Internet: URL:https://www.its-owl.de/fileadmin/PDF/V eranstaltungen/2017/Transfertag/7A_Turck-E lectronics.PDF [gefunden am 2018-03-08]

## Beschreibung

### GEBIET DER ERFINDUNG

Die Erfindung betrifft ein Verfahren zur automatischen Konfiguration eines Austauschfeldgeräts in einem Prozessleitsystem mittels eines Konfigurationsanbieters. Die Erfindung betrifft weiterhin einen entsprechenden Konfigurationsanbieter.

### TECHNISCHER HINTERGRUND

Feldgeräte sind technische Einrichtungen im Bereich der Automatisierungstechnik. Zu den Feldgeräten gehören Aktoren (wie z. B. Ventile, Stellglieder, Motoren) und Sensoren (wie z.B. Durchflussmengenmesser, Temperaturmesser, pH-Sensoren).

Die Feldgeräte sind dabei üblicherweise mit einem Steuerungs- und Leitsystem verbunden. Zusammen bilden die Feldgeräte und das Steuerungs- und Leitsystem ein Prozessleitsystem aus. Die Kommunikation zwischen den Feldgeräten und dem Steuerungs- und Leitsystemen läuft in der Regel über einen Feldbus. Anstelle eines Feldbusses kommen inzwischen aber auch vermehrt andere Netzwerktechniken zum Einsatz, beispielsweise Industrial Ethernet und insbesondere echtzeitfähiges Ethernet.

Auf diese Weise wird in Industrieanlagen ein Prozess von dem Steuerungs- und Leitsystem überwacht, gesteuert und geregelt. Die Sensoren ermitteln Regelgrößen wie Temperatur, Druck und Durchfluss. Diese Regelgrößen werden von dem jeweiligen Feldgerät über einen Feldbus oder einem anderen Kommunikationskanal an das Steuerungs- und Leitsystem übermittelt. Von diesem werden aus den Regelgrößen anhand prozessspezifischer Vorgaben Stellgrößen ermittelt und an die Feldgeräte, insbesondere an die Aktoren, übertragen. Entsprechend der Stellgrößen wirken die Aktoren auf den gesteuerten bzw. geregelten Produktionsprozess ein.

DE 102009028655 A1 offenbart ein Verfahren zum Austausch eines Feldgeräts der Automatisierungstechnik durch ein typengleiches Ersatzgerät, wobei das Feldgerät über ein Bussystem mit einem übergeordneten Steuersystem kommuniziert und wobei die Parametrierung/Konfigurierung des Feldgeräts über ein Konfigurier-/Managementsystem erfolgt. Die auf dem Bussystem kommunizierten Parametrier-/Konfigurierdaten werden von einem Feldbus Interface automatisch mitgehört. Im Falle eines Austauschs des Feldgeräts durch ein typengleiches Ersatzgerät werden die aufgezeichneten Parametrier-/Konfigurierdaten automatisch dem typengleichen Ersatzgerät zugewiesen.

DE 102012102518 A1 offenbart ein Verfahren zum Parametrieren eines Feldgerätes, wobei ein Feldgerät über eine Parametrierung entsprechend einem ersten Gerätemodell und einem ersten Parametersatz verfügt, wobei in dem Fall, dass das Feldgerät durch ein Ersatz-Feldgerät ausgetauscht wird, ein zweiter Parametersatz entsprechend einem zweiten Gerätemodell zur Parametrierung des Ersatzfeldgerätes an das Ersatzfeldgerät übertragen wird, wobei das zweite Gerätemodell aus dem ersten Gerätemodell abgeleitet wird, und wobei sich das zweite Gerätemodell und der zweite Parametersatz von dem ersten Gerätemodell und dem ersten Parametersatz unterscheiden.

DOI: 10.1109/ETFA.2012.6489654, Duerkop et al., IEEE, 17. September 2012, "Towards autoconfiguration of industrial automation systems: A case study using Profinet 10", offenbart ein Verfahren für die Autokonfiguration von Echtzeit-Ethernet-Systemen.

Turck Electronics, 11. Oktober 2017, "Session: 7 Autokonfiguration von Multiprotokoll-I/O Modulen nach einem Gerätetausch" offenbart ein Verfahren zur Autokonfiguration von Feldgeräten nach einem Gerätetausch.

### BESCHREIBUNG

Es ist eine Aufgabe der Erfindung, ein verbessertes Verfahren zur automatischen Konfiguration eines Austauschfeldgeräts in einem Prozessleitsystem bereitzustellen, mittels dem die Nachteile des Stands der Technik ausgeräumt oder zumindest verringert werden können. Es ist eine weitere Aufgabe der Erfindung, einen entsprechenden Konfigurationsanbieter bereitzustellen.

Die Aufgabe wird erfindungsgemäß anhand des Verfahrens und des Konfigurationsanbieters gemäß der Gegenstände der unabhängigen Patentansprüche gelöst.

Es wird ein Verfahren zur automatischen Konfiguration eines Austauschfeldgeräts in einem Prozessleitsystem gemäß dem Gegenstand des unabhängigen Patentanspruchs 1 bereitgestellt. Das Prozessleitsystem umfasst ein oder mehrere Feldgeräte und einen Konfigurationsanbieter.

Die Feldgeräte und der Konfigurationsanbieter sind über ein Kommunikationssystem kommunizierend gekoppelt. Die Feldgeräte und der Konfigurationsanbieter können dafür entsprechende Schnittstellen aufweisen. Das Kommunikationssystem ist ein Feldbus sein. Vorzugsweise kann der Feldbus ein CANopen basierter Feldbus, insbesondere ein Bürkert System Bus (büS), sein. Alternativ kann das Kommunikationssystem beispielsweise ein Industrial Ethernet, insbesondere ein echtzeitfähiges Ethernet, sein. Ein Feldbus bietet häufig eine einfache Verkabelung und eine robuste Kommunikation. Ein Ethernet hat Vorteile in der Geschwindigkeit.

Ein Austauschfeldgerät ist ein erstes Feldgerät, das in das Prozessleitsystem als Ersatz für ein zweites Feldgerät integriert wird. Das zweite Feldgerät ist vorher im Prozessleitsystem integriert gewesen und hat eine bestimmte Funktion innerhalb des Prozessleitsystems übernommen. Für den Austausch wird das zweite Feldgerät aus dem Prozessleitsystem entfernt und das erste Feldgerät wird an der Stelle des zweiten Feldgeräts im Prozessleitsystem eingesetzt und angeschlossen. Nach der automatischen Konfiguration des ersten Feldgeräts mit den Konfigurationsdaten des zweiten Feldgeräts ersetzt das erste Feldgerät das zweite Feldgerät im Prozessleitsystem in funktonaler Hinsicht vollständig.

Das Verfahren umfasst das automatische Abrufen und Vorhalten von Konfigurationsdaten der jeweiligen Feldgeräte. Der Konfigurationsanbieter ist ausgebildet, um die Konfigurationsdaten von den Feldgeräten abzurufen und vorzuhalten. Die Feldgeräte sind ausgebildet, ihre Konfigurationsdaten auf Anforderung an den Konfigurationsanbieter zu übertragen.

Das Verfahren umfasst das automatische Erkennen des ersten Feldgeräts als Austauschfeldgerät. Das erste Feldgerät wird (von dem Konfigurationsanbieter) als Austauschfeldgerät erkannt, nachdem ein zweites Feldgerät aus dem Prozessleitsystem entfernt und durch das erste Feldgerät ersetzt wurde.

Das Verfahren umfasst das automatische Konfigurieren des ersten Feldgeräts mit den vorgehaltenen Konfigurationsdaten des zweiten Feldgerätes. Der Konfigurationsanbieter ist dafür ausgebildet, um das erste Feldgerät mit den vorgehaltenen Konfigurationsdaten des zweiten Feldgeräts zu konfigurieren. Die Feldgeräte sind ausgebildet, um Konfigurationsdaten von dem Konfigurationsanbieter zu empfangen, und mittels der empfangenen Konfigurationsdaten von dem Konfigurationsanbieter konfiguriert zu werden.

Das Verfahren umfasst das wiederkehrende Aussenden einer Bekanntmachungsnachricht. Mittels der Bekanntmachungsnachricht wird der Konfigurationsanbieter bei den Feldgeräten bekannt gemacht. Der Konfigurationsanbieter ist ausgebildet, wiederkehrend eine Bekanntmachungsnachricht an die Feldgeräte zu senden, um sich bekannt zu machen. Die Feldgeräte sind ausgebildet, eine Bekanntmachungsnachricht von dem Konfigurationsanbieter zu empfangen. Bei Empfang einer Bekanntmachungsnachricht wechseln die Feldgeräte von einem Bereitschaftsmodus in den aktiven Betrieb.

Durch obige Aspekte wird auf einfache und effiziente Weise eine automatische Konfiguration von Austauschfeldgeräten ermöglicht.

Die Bekanntmachungsnachricht ist eine Nachricht an alle Feldgeräte, also eine sogenannte Broadcastnachricht. Eine Broadcastnachricht erreicht alle Teilnehmer eines Kommunikationssystems, ohne dass die Teilnehmer explizit als Empfänger angegeben sein müssen. Ein Empfänger einer Broadcastnachricht kann selbst entscheiden, ob und wie er die Broadcastnachricht weiter verarbeitet oder ob er die Broadcastnachricht verwirft. Der Konfigurationsanbieter kann so auch unbekannte Feldgeräte ansprechen.

Das Verfahren umfasst das Registrieren der Feldgeräte bei dem und durch den Konfigurationsanbieter. Die Feldgeräte sind ausgebildet, dem Konfigurationsanbieter eine Nachricht zu senden, um sich bei dem Konfigurationsanbieter zu registrieren. Die Nachricht enthält Identifikationsdaten des jeweiligen Feldgeräts. Der Konfigurationsanbieter is ausgebildet, Feldgeräte zu registrieren, die sich bei dem Konfigurationsanbieter melden. Dies ermöglicht eine effiziente und ressourcenschonende Kommunikation.

Das Verfahren umfasst das Senden einer Registrierungsanforderung an die Feldgeräte, damit sich die Feldgeräte bei dem Konfigurationsanbieter registrieren. Der Konfigurationsanbieter ist ausgebildet, die Registrierungsanforderung an die Feldgeräte zu senden. Die Feldgeräte sind ausgebildet, sich nach dem Empfang der Registrierungsanforderung bei dem Konfigurationsanbieter zu registrieren. Dieser Aspekt ermöglicht die einfache Erkennung fehlender Feldgeräte.

Gemäß einem weiteren vorteilhaften Aspekt kann das Verfahren das Vorhalten und Pflegen einer ersten Liste mit Identifikationsdaten bekannter Feldgeräte umfassen.

Die bekannten Feldgeräte können solche Feldgeräte sein, die bei dem Konfigurationsanbieter aktuell registriert sind und/oder in der Vergangenheit registriert waren. Der Konfigurationsanbieter kann ausgebildet sein, die erste Liste vorzuhalten und zu pflegen. Die Verwaltung der Feldgeräte in Listen ist ressourcenschonend und hinsichtlich der technischen Anforderungen vergleichsweise anspruchslos.

Die Bezeichnung "Liste" soll nicht als Beschränkung auf eine bestimmte Datenstruktur (z.B. verkette Listen) verstanden werden. Bei den Listen kann es sich beispielsweise auch um Arrays, Heaps und Hashtables handeln. Aber auch komplexe Datenstrukturen und ganze Datenbanken können als Liste verstanden werden. Jede der Datenstrukturen hat eigene Vor- und Nachteile, die abhängig vom Einsatzzweck abzuwägen sind.

Gemäß einem weiteren vorteilhaften Aspekt kann das Verfahren das Vorhalten und Pflegen von zu den bekannten Feldgeräten der ersten Liste zugehörigen Konfigurationsdaten umfassen. Der Konfigurationsanbieter kann ausgebildet sein, zu den bekannten Feldgeräten der ersten Liste zugehörige Konfigurationsdaten vorzuhalten und zu pflegen. In anderen Worten kann für jedes Feldgerät, das in der ersten Liste verzeichnet ist, vom Konfigurationsanbieter ein Backup der aktuellsten Konfigurationsdaten gespeichert werden. Die Konfigurationsdaten können in einem lokalen Speicher des Konfigurationsanbieters oder in einem entfernten/verteilten Speicher vorgehalten werden. Dies ermöglicht die automatische Konfiguration von Austauschfeldgeräten mit den Konfigurationsdaten des ersetzten Feldgeräts.

Gemäß einem weiteren vorteilhaften Aspekt können die Identifikationsdaten der Feldgeräte eine Ident-Nummer und eine Serien-Nummer umfassen. Die Ident-Nummer kann einer funktionsabhängigen Geräteklasse des jeweiligen Feldgeräts entsprechen. Die Serien-Nummer kann innerhalb der jeweiligen Geräteklasse einmalig sein. Neben der Ident-Nummer und der Serien-Nummer können weitere Identifikationsdaten, insbesondere zu Firmware-/Softwareversionen und/oder Hardwarevarianten, verwendet werden. Dieser Aspekt ermöglicht eine sehr einfache Erkennung von kompatiblen Austauschfeldgeräten.

Gemäß einem weiteren vorteilhaften Aspekt kann das Verfahren das Vorhalten und Pflegen einer zweiten Liste mit Identifikationsdaten aktiver Feldgeräte umfassen. Die aktiven Feldgeräte können solche Feldgeräte sein, die bei dem Konfigurationsanbieter aktuell registriert sind. Der Konfigurationsanbieter kann ausgebildet sein, die zweite Liste vorzuhalten und zu pflegen. Die Verwaltung mittels Listen ist ressourcenschonend und effizient.

Gemäß einem weiteren vorteilhaften Aspekt kann das Verfahren das Befüllen der zweiten Liste mit den Identifikationsdaten der sich registrierenden Feldgeräte umfassen. Der Konfigurationsanbieter kann ausgebildet sein, die zweite Liste mit den Identifikationsdaten der Feldgeräte zu füllen, die sich bei dem Konfigurationsanbieter registrieren.

Gemäß einem weiteren vorteilhaften Aspekt kann das Verfahren das Neuanlegen oder Leeren der zweiten Liste umfassen. Der Konfigurationsanbieter kann ausgebildet sein, die zweite Liste neuanzulegen oder zu leeren, wenn die Feldgeräte mit einer Registrierungsanforderung aufgefordert wurden, sich bei dem Konfigurationsanbieter zu registrieren. Dieser Aspekt ermöglicht die einfache Erkennung von fehlenden Feldgeräten.

Gemäß einem weiteren vorteilhaften Aspekt kann das Verfahren das Vergleichen der ersten Liste mit der zweiten Liste umfassen. Durch den Vergleich kann ein fehlendes (entferntes) Feldgerät erkannt werden. Ein Feldgerät wird als fehlendes Feldgerät erkannt, wenn die zugehörigen Identifikationsdaten nur in der ersten Liste und nicht in der zweiten Liste vorhanden sind. Der Konfigurationsanbieter kann ausgebildet sein, zu diesem Zweck die erste Liste mit der zweiten Liste zu vergleichen. Der Vergleich der Listen ist eine sehr einfache und effiziente Möglichkeit, um fehlende Feldgeräte zu erkennen.

Gemäß einem weiteren vorteilhaften Aspekt kann das Verfahren das Vergleichen der zweiten Liste mit der ersten Liste umfassen. Durch den Vergleich kann ein neues Feldgerät erkannt werden. Ein Feldgerät wird als neues Feldgerät erkannt, wenn die zugehörigen Identifikationsdaten nur in der zweiten Liste und nicht in der ersten Liste vorhanden sind. Der Konfigurationsanbieter kann ausgebildet sein, zu diesem Zweck die zweite Liste mit der ersten Liste zu vergleichen. Der Vergleich der Listen ist eine sehr einfache und effiziente Möglichkeit, um neue Feldgeräte zu erkennen.

Das Verfahren umfasst das automatische Erkennen eines neuen Feldgeräts als ein erstes Feldgerät und eines fehlenden Feldgeräts als ein zweites Feldgerät, durch den Konfigurationsanbieter. Das zweite Feldgerät wird dann als das ersetzte Feldgerät und das erste Feldgerät als das Austauschfeldgerät erkannt. Voraussetzung dafür kann sein, dass das neue Feldgerät und das fehlende Feldgerät als einzige Feldgeräte einer gemeinsamen Geräteklasse angehören. Auf diese Weise wird eine automatische Zuordnung zwischen ersetztem Feldgerät und Austauschfeldgerät erreicht.

Gemäß einem weiteren vorteilhaften Aspekt kann eine Meldung ausgegeben werden, wenn mehrere fehlende Feldgeräte mit gleicher Ident-Nummer vorhanden sind und/oder wenn mehrere unbekannte Feldgeräte mit gleicher Ident-Nummer vorhanden sind. Es kann dann eine manuelle Zuordnung von Austauschfeldgeräten zu ersetzten Feldgeräten stattfinden. Dieser Aspekt deckt den Fall ab, dass die Zuordnung nicht eindeutig ist.

Gemäß einem weiteren vorteilhaften Aspekt kann das Verfahren das Übertragen der vorgehaltenen Konfigurationsdaten des zweiten Feldgeräts in das erste Feldgerät umfassen. Der Konfigurationsanbieter kann ausgebildet sein, die vorgehaltenen Konfigurationsdaten des zweiten Feldgeräts in das erste Feldgerät zu übertragen. Das Feldgerät kann ausgebildet sein, die zur Verfügung gestellten Konfigurationsdaten abzurufen.

Gemäß einem weiteren vorteilhaften Aspekt kann das Verfahren das Konfigurieren des ersten Feldgeräts mit den an das erste Feldgerät übertragenen Konfigurationsdaten umfassen. Der Konfigurationsanbieter kann ausgebildet sein, das erste Feldgerät auf diese Weise automatisch zu konfigurieren. Dieser Aspekt ermöglicht die automatische Konfiguration der Austauschfeldgeräte.

Gemäß einem weiteren vorteilhaften Aspekt kann das Verfahren das Ersetzen der Identifikationsdaten des zweiten Feldgeräts in der ersten Liste mit den Identifikationsdaten des ersten Feldgeräts umfassen. Der Konfigurationsanbieter kann ausgebildet sein, die Identifikationsdaten des zweiten Feldgeräts in der ersten Liste mit den Identifikationsdaten des ersten Feldgeräts zu ersetzen. Dieser Aspekt erleichtert die Erkennung fehlender Feldgeräte und minimiert den Speicherbedarf.

Gemäß einem weiteren vorteilhaften Aspekt kann das Verfahren das Übertragen von Konfigurationsdaten von einem neuen Feldgerät an den Konfigurationsanbieter umfassen. Vorteilhaft werden die Konfigurationsdaten nur übertragen, sofern das neue Feldgerät kein fehlendes Feldgerät ersetzt. Der Konfigurationsanbieter kann ausgebildet sein, die Konfigurationsdaten von einem Feldgerät abzurufen. Dies ermöglicht die automische Konfiguration von Austauschfeldgeräten.

Gemäß einem weiteren vorteilhaften Aspekt kann das Verfahren das Übertragen von Konfigurationsdaten von einem Feldgerät an den Konfigurationsanbieter umfassen. Vorteilhaft werden die Konfigurationsdaten übertragen, nachdem sie auf dem Feldgerät aktualisiert/geändert wurden. Der Konfigurationsanbieter kann ausgebildet sein, die Konfigurationsdaten von einem Feldgerät abzurufen. Die Feldgeräte können ausgebildet sein, dem Konfigurationsanbieter Änderungen an den eigenen Konfigurationsdaten bekannt zu machen. Auf diese Weise sind die vorgehaltenen Konfigurationsdaten immer aktuell.

Gemäß einem weiteren vorteilhaften Aspekt kann das Verfahren das Vorhalten der an den Konfigurationsanbieter übertragenen Konfigurationsdaten in einem lokalen Speicher des Konfigurationsanbieters oder in einem entfernten/verteilten Speicher umfassen. Der Konfigurationsanbieter kann ausgebildet sein, die abgerufenen Konfigurationsdaten in einem lokalen Speicher des Konfigurationsanbieters oder in einem entfernten und/oder verteilten Speicher vorzuhalten. Der entfernte Speicher kann von einem anderen Teilnehmer des Kommunikationssystems, insbesondere von einem anderen Feldgerät, bereitgestellt werden. Vorteilhaft können die Konfigurationsdaten auf mehreren Feldgeräten verteilt gespeichert werden. Vorteilhaft können die Konfigurationsdaten eines Feldgeräts dann (komplett oder jeweils anteilig) auf einem oder mehreren anderen Feldgeräten gespeichert werden. Durch die entfernte und/oder verteilte Speicherung ist der Speicherbedarf in den einzelnen Feldgeräten und auch insbesondere für den Konfigurationsanbieter vergleichsweise niedrig. Durch eine mehrfache Abspeicherung wird die Verfügbarkeit durch Redundanz erhöht.

Gemäß einem weiteren vorteilhaften Aspekt kann das Verfahren das Einfügen der Identifikationsdaten des neuen Feldgeräts in die erste Liste, insbesondere durch den Konfigurationsanbieter, umfassen. Gemäß einem weiteren vorteilhaften Aspekt kann der Konfigurationsanbieter ausgebildet sein, den Identifikationsdaten in der ersten Liste die entsprechenden vorgehaltenen Konfigurationsdaten zuzuordnen. Dies ermöglicht die einfache Konfiguration eines Austauschfeldgeräts mittels des Konfigurationsanbieters.

Gemäß einem weiteren Aspekt der Erfindung wird ein Konfigurationsanbieter für ein Prozessleitsystem bereitgestellt. Der Konfigurationsanbieter kann zur automatischen Konfiguration eines Austauschfeldgeräts in dem Prozessleitsystem, umfassend ein oder mehrere Feldgeräte, ausgebildet sein. Der Konfigurationsanbieter kann ausgebildet sein, zusammenwirkend mit den Feldgeräten das erfindungsgemäße Verfahren auszuführen. Viele Aspekte und Vorteile des Konfigurationsanbieters wurden bereits und werden noch im Zusammenhang mit dem erfindungsgemäßen Verfahren mitbeschrieben.

Gemäß einem vorteilhaften Aspekt kann der Konfigurationsanbieter das erfindungsgemäße Verfahren und insbesondere die Konfiguration des Austauschfeldgeräts (zumindest im Regelfall) vollautomatisch und autonom ausführen. In anderen Worten kann das Verfahren von dem Konfigurationsanbieter masterlos, also ohne einen übergeordneten Busmaster, ausgeführt werden. Eine manuelle Konfiguration des Austauschfeldgeräts, zum Beispiel durch ServicePersonal direkt am Feldgerät oder mittels eines Konfigurator-Werkzeugs eines übergeordneten Steuer- und Leitsystems, ist somit im Regelfall nicht mehr notwendig.

Gemäß einem weiteren vorteilhaften Aspekt kann der Konfigurationsanbieter ein beliebiges Feldgerät oder ein Gateway sein. Die Funktionen des Konfigurationsanbieters können als Softwareroutinen (z.B. in der Firmware) des Feldgerätes oder des Gateways implementiert sein. Dies ermöglicht die automatische Konfiguration von Austauschfeldgeräten ohne signifikante Mehrkosten.

Gemäß einem weiteren vorteilhaften Aspekt können Informationen des Konfigurationsanbieters (z. B. die ersten und zweiten Listen) in einer Anzeige dargestellt werden. Die Anzeige kann sich an einem beliebigen Feldgerät oder Gateway, das mit dem Bussystem verbunden ist, befinden. Über die Anzeige kann der Konfigurationsanbieter mit einer grafischen Bedienoberfläche bedient werden.

Nützliche Informationen, die das Verständnis der Erfindung verbessern, betreffen ein automatisch konfigurierbares Feldgerät. Das Feldgerät kann zur Integration in ein Prozessleitsystem mit einem Konfigurationsanbieter ausgebildet sein. Viele Aspekte und Vorteile des Feldgeräts wurden bereits und werden noch im Zusammenhang mit dem erfindungsgemäßen Verfahren mitbeschrieben.

Gemäß einem vorteilhaften Aspekt kann das Feldgerät einen Konfigurationsagenten aufweisen. Der Konfigurationsagent kann ausgebildet sein, das erfindungsgemäße Verfahren auszuführen. Der Konfigurationsagent arbeitet als Client und kommuniziert mit dem Konfigurationsanbieter.

Gemäß einem vorteilhaften Aspekt kann das Feldgerät nach seiner Registrierung bei dem Konfigurationsanbieter eine vorbestimmte Zeitspanne auf eine Aktion (Antwort) des Konfigurationsanbieters zu warten. Das Feldgerät kann ausgebildet sein, eine Wartungsmeldung auszugeben, wenn eine Aktion des Konfigurationsanbieters ausbleibt oder sofern die Aktion fehlschlägt. Das Feldgerät kann beispielsweise einen optischen oder einen akustischen Signalgeber umfassen. Die Wartungsmeldung kann der NAMUR Spezifikation entsprechen. Wartungsmeldungen können vorteilhaft als (NAMUR-)Farbwerte einer Leuchtanzeige wahrnehmbar gemacht werden.

Gemäß einem vorteilhaften Aspekt kann den Feldgeräten jeweils ein Signalgeber zugeordnet sein. Vorteilhaft ist der Signalgeber unmittelbar mit dem Feldgerät verbunden bzw. an diesem angebracht. Der Signalgeber kann sich also vorteilhaft am Ort des Feldgerätes befinden. Beispielsweise kann der Signalgeber ein optischer Signalgeber, wie z. B. ein Leuchtring, ein Leuchtstreifen, eine Signalsäule (Mehrfachleuchte), (farbige) LEDs oder ein Display sein. Auch kann der Signalgeber ein akustischer Signalgeber sein. Auch Mischformen sind möglich, beispielsweise eine Mehrfachleuchte mit einem integrierten Schallgebermodul. Andere Formen von Signalgebern sind ebenfalls denkbar, beispielsweise solche, die ein haptisches Feedback geben (Vibrationsmodule) oder beispielsweise ein Webserver, der Anzeigeinformationen zwar bereit- aber nicht selbst darstellt. Vorzugsweise ist der jeweilige Signalgeber jedoch eindeutig und unmittelbar einem einzigen Feldgerät zugeordnet, insbesondere unmittelbar damit verbunden bzw. an diesem befestigt. Daher sind optische Signalgeber in Form von leuchtenden Elementen (z.B. LEDs etc.) besonders vorteilhaft.

Gemäß einem vorteilhaften Aspekt kann das Feldgerät ausgebildet sein, den Konfigurationsagenten nach dem Ausgeben einer Wartungsmeldung zu deaktivieren. Dies stellt sicher, dass eine Wartung stattfindet, wenn sie notwendig ist.

Gemäß einem vorteilhaften Aspekt kann das Feldgerät ausgebildet sein, in einem Grundzustand die eigenen Konfigurationsdaten auf Änderungen und das Kommunikationssystem auf eine Registrierungsanforderung zu überwachen. Dieser Aspekt vereinfacht die Kommunikation zwischen Feldgeräten und Konfigurationsanbieter.

Nützliche Informationen, die das Verständnis der Erfindung verbessern, betreffen ein System mit einem Konfigurationsanbieter und einem oder mehreren automatisch konfigurierbaren Feldgeräten. Der Konfigurationsanbieter kann ein Konfigurationsanbieter gemäß Aspekten der Erfindung sein. Das System kann ausgebildet sein, das Verfahren zur automatischen Konfiguration eines Austauschfeldgerätes in einem Prozessleitsystem auszuführen. Das System vereinfacht und verkürzt den Austausch von Feldgeräten in einem Prozessleitsystem.

### BESCHREIBUNG DER FIGUREN

Im Folgenden werden die Merkmale und Aspekte der Erfindung anhand von Ausführungsbeispielen und unter Bezugnahme auf die Figuren näher erläutert. Dabei zeigt/zeigen:
- FIG. 1a bis FIG. 1e eine sequenzielle vereinfachte schematische Darstellung eines Prozessleitsystems mit Feldgeräten und einem Konfigurationsanbieter,
- FIG. 2 ein vereinfachtes Zustandsdiagramm eines Konfigurationsanbieters,
- FIG. 3 ein vereinfachtes Zustandsdiagramm eines Konfigurationsagenten eines Feldgeräts,
- FIG. 4a bis FIG. 4e sequenzielle vereinfachte schematische Darstellungen einer ersten Liste und einer zweiten Liste des Konfigurationsanbieters aus FIG. 1a bis FIG. 1e, und
- FIG. 5 eine vereinfachte schematische Darstellung eines Konfigurationsanbieters.

### DETAILLIERTE BESCHREIBUNG

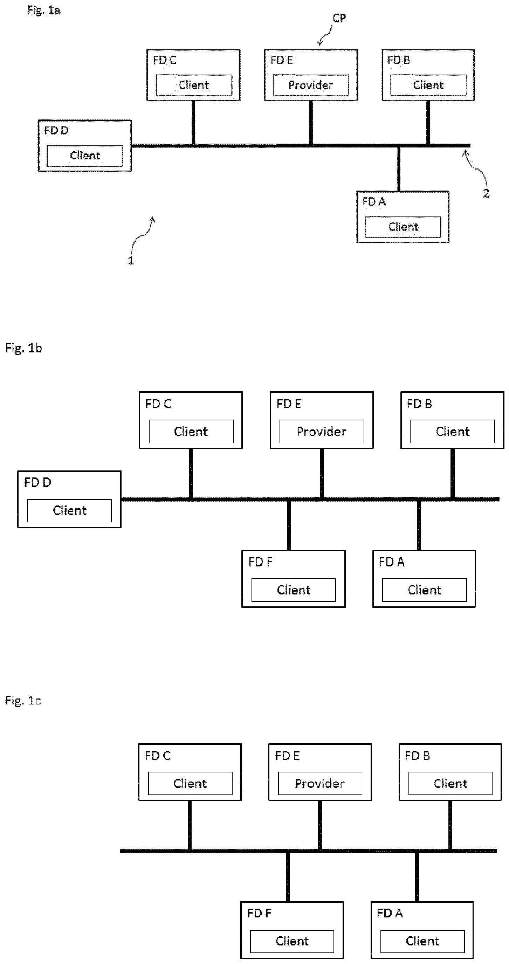

Die FIG. 1a bis FIG. 1e zeigen eine sequenzielle vereinfache schematische Darstellung eines Prozessleitsystems 1 mit mehreren Feldgeräten FD A bis FD X und einem Konfigurationsanbieter CP. Die Feldgeräte FD A bis FD X und der Konfigurationsanbieter CP sind durch ein Kommunikationssystem 2 kommunizierend gekoppelt. Das Kommunikationssystem 2 ist ein Feldbus. Alternativ kann das Kommunikationssystem auch ein Industrial Ethernet oder eine andere Form von Netzwerk sein.

Bei dem Konfigurationsanbieter CP handelt es sich um ein Feldgerät FD E. Der Konfigurationsanbieter kann alternativ auch durch einen anderen Teilnehmer des Kommunikationssystems 2, wobei der andere Teilnehmer kein Feldgerät FD A bis FD X ist, verwirklicht werden. Insbesondere kann ein Gateway GW des Feldbusses 2 als Konfigurationsanbieter CP ausgebildet sein. Auch kann der Konfigurationsanbieter CP ein Teilnehmer des Kommunikationssystems 2 sein, der keine Doppelfunktion erfüllt, der also weder Feldgerät FD A bis FD X noch Gateway ist. Der Konfigurationsanbieter CP kann dann als zusätzlicher Teilnehmer an beliebiger Stelle in das Prozessleitsystem 1 integriert werden.

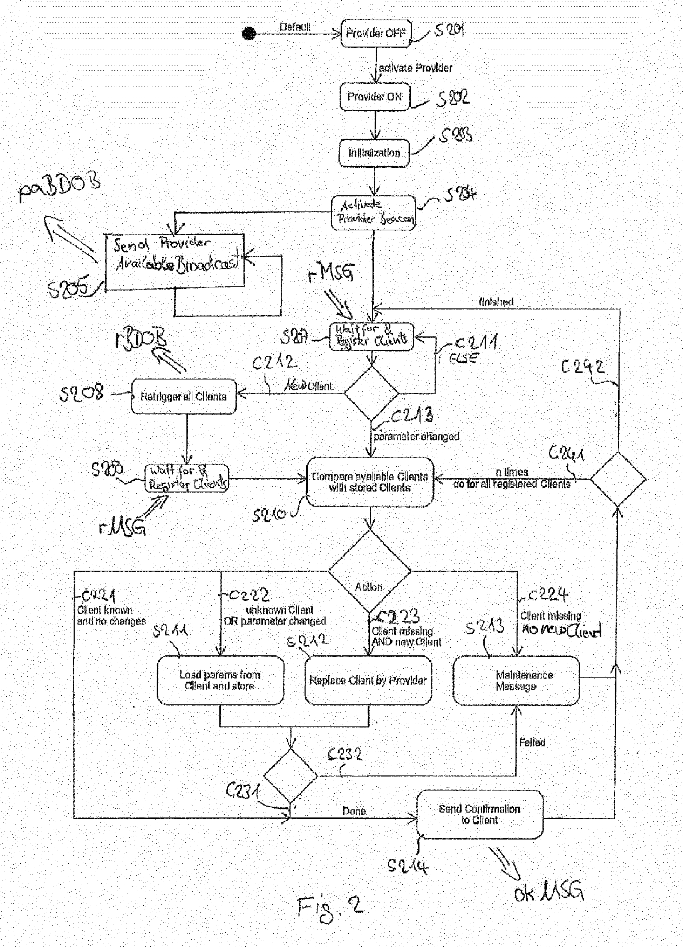

Die Funktionen des Konfigurationsanbieters CP sind als Softwareroutinen in der Firmware eines Gastgebersystems, hier des Feldgeräts FD E, implementiert. Die Funktionen des Konfigurationsanbieters werden insbesondere anhand der FIG. 2 näher erläutert.

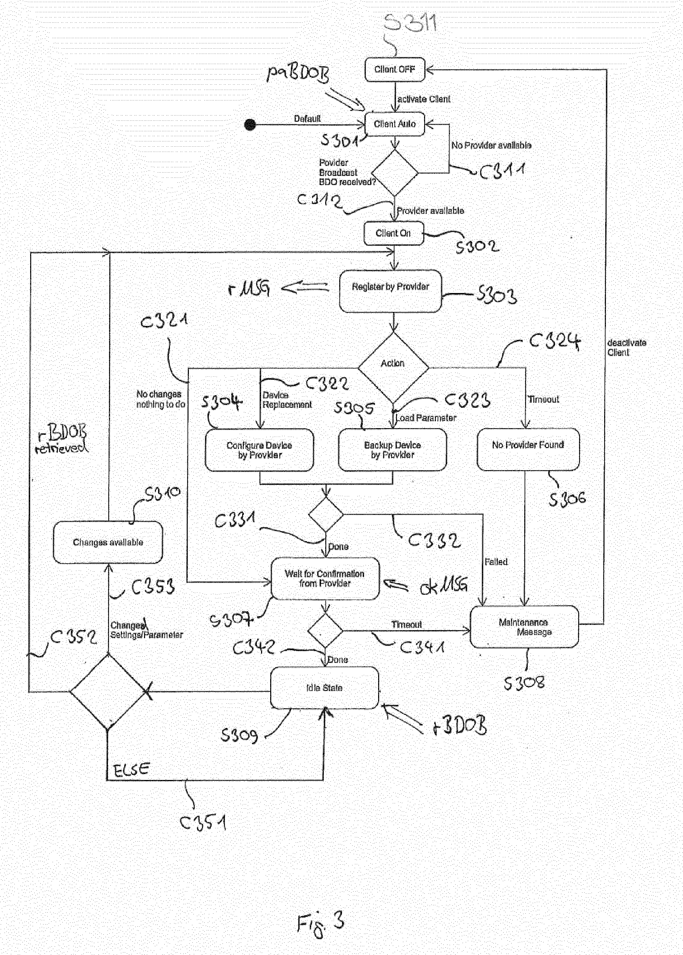

Die Feldgeräte FD A bis FD X umfassen eine Steuerung mit einem Konfigurationsagenten. Die Funktionen des Konfigurationsagenten sind als Softwareroutinen in der Firmware der Feldgeräte implementiert. Die Funktionen des Konfigurationsagenten werden insbesondere anhand der FIG. 3 näher erläutert.

Die Funktionen des Konfigurationsanbieters (CP/Provider) und der Konfigurationsagenten (Clients) der Feldgeräte FD A bis FD X interagieren miteinander und ergänzen sich gegenseitig um das Verfahren ausführen zu können.

Ist ein Feldgerät FD E als Konfigurationsanbieter CP ausgebildet, weist das Feldgerät FD E neben der normalen Funktionalität des Feldgeräts als Sensor und/oder Aktor gleichzeitig auch die Funktionalität des Konfigurationsanbieters (Provider) auf.

Zu Zwecken der Redundanz können mehr als ein Konfigurationsanbieter CP in einem Prozessleitsystem aktiv sein. Die Konfigurationsanbieter CP können dann gleichzeitig auch die Funktionalität eines Konfigurationsagenten (Clients) aufweisen. Die Konfigurationsanbieter CP können unabhängig voneinander aktiv sein und das erfindungsgemäße Verfahren mit den Feldgeräten FD A bis FD X ausführen. Alternativ kann ein erster Konfigurationsanbieter CP aktiv sein, während ein weiterer (passiver) Konfigurationsanbieter lediglich die Konfigurationsdaten des aktiven Konfigurationsanbieters CP vorhält und den aktiven Konfigurationsanbieter CP überwacht. Im Fehlerfall des aktiven Konfigurationsanbieters CP, bzw. dessen Gastgebersystems kann ein entsprechendes Austauschfeldgerät von dem passiven Konfigurationsanbieter konfiguriert werden und die Funktion des Konfigurationsanbieters CP, bzw. dessen Gastgebersystems FD E übernehmen. Alternativ kann ein weiterer (passiver) Konfigurationsanbieter in direkter Kommunikation mit dem aktiven Konfigurationsanbieter CP stehen und dessen Daten und Einstellungen spiegeln. Im Fehlerfall des aktiven Konfigurationsanbieters CP kann der vormals passive Konfigurationsanbieter als aktiver Konfigurationsanbieter CP arbeiten.

Die Softwareroutinen des Konfigurationsanbieters CP (Provider) und/oder der Konfigurationsagenten (Clients) der Feldgeräte FD A bis FD X können direkt in der Firmware integriert sein. Alternativ können die Softwareroutinen des Konfigurationsanbieters CP und/oder der Konfigurationsagenten der Feldgeräte FD A bis FD X auch in einem anderen Speicher(-bereich) als die Firmware gespeichert sein und/oder beispielsweise aus dem Kommunikationssystem 2 nachgeladen werden, ohne dabei vom Erfindungsgedanken abzuweichen.

In FIG. 1a sind im dargestellten Teil des Prozessleitsystems 1 die Feldgeräte FD A , FD B, FD C und FD D angeschlossen. Das Prozessleitsystem 1 weist weiterhin einen Konfigurationsanbieter CP auf, welcher ebenfalls am Feldbus 2 angeschlossen ist. Im gezeigten Fall ist die Funktionalität des Konfigurationsanbieters CP im Feldgerät FD E implementiert.

Die Feldgeräte FD A bis FD X sind gemäß ihrer Funktionalität im Prozessleitsystem 1 bezeichnet. Das bedeutet, dass jedes Feldgerät der Feldgeräte FD A bis FD X eine bestimmte Funktion (A bis X) im Prozessleitsystem 1 erfüllt. Wenn nach einem Feldgerätetausch und einer anschließenden Konfiguration ein neues Feldgerät FD X dieselbe Funktion wie ein altes Feldgerät FD D erfüllt, erhält das neue Feldgerät FD X auch die gleiche Bezeichnung wie das alte Feldgerät FD D und wird als Austauschfeldgerät FD D bezeichnet.

In FIG. 1b ist ein weiteres Feldgerät FD F mit dem Feldbus 2 verbunden. Das Feldgerät FD F ist ein neues Feldgerät, wenn es zuvor (hier in FIG. 1a) nicht mit dem Feldbus 2 verbunden war. Wenn das Feldgerät FD F in der Vergangenheit bereits mit dem Feldbus 2 verbunden und vom Konfigurationsanbieter CP registriert war, ist das Feldgerät FD F ein neues bekanntes Feldgerät. War das Feldgerät FD F zuvor nicht mit dem Feldbus 2 verbunden und wurde es nicht vom Konfigurationsanbieter CP zuvor registriert, so ist das weitere Feldgerät FD F ein neues unbekanntes Feldgerät. Da im gezeigten Fall zuvor kein anderes Feldgerät entfernt wurde, ist das weitere Feldgerät FD F kein Austauschfeldgerät.

In FIG. 1c wurde das Feldgerät FD D aus dem Prozessleitsystem 1 entfernt. Dabei ist nicht zwingend notwendig, dass das Feldgerät FD D physisch aus dem Prozessleitsystem 1 entfernt wird. Das Feldgerät FD D kann auch ausgeschaltet oder defekt sein.

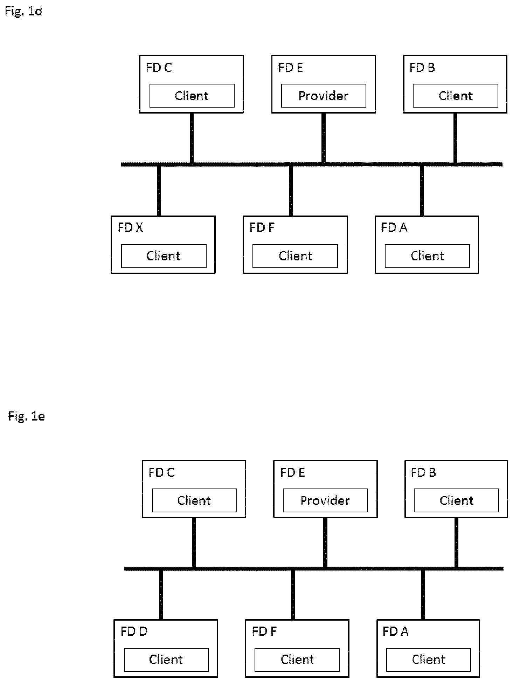

In FIG. 1d wurde das nun entfernte Feldgerät FD D durch ein neues Feldgerät FD X ersetzt. Direkt nach der Integration in das Prozessleitsystem 1 ist das Feldgerät FD X noch nicht konfiguriert. Das Feldgerät FD X weist somit lediglich eine Grundfunktionalität auf und kann das zuvor entfernte Feldgerät FD D noch nicht vollständig in funktionaler Hinsicht ersetzen. Aus diesem Grund wird das Feldgerät in FIG. 1d als Feldgerät FD X und nicht bereits als Feldgerät FD D bezeichnet.

In FIG. 1e ist das Feldgerät FD X zwischenzeitlich vom Konfigurationsanbieter CP als Austauschfeldgerät für Feldgerät FD D erkannt worden. Das Feldgerät FD X wurde daraufhin vom Konfigurationsanbieter CP mit von dem Konfigurationsanbieter CP vorgehaltenen Konfigurationsdaten des Feldgeräts FD D konfiguriert. Das Feldgerät mit der ehemaligen Bezeichnung FD X übernimmt nach der Konfiguration durch den Konfigurationsanbieter CP die Funktion des ehemaligen, bzw. entfernten Feldgeräts FD D vollständig. Das Feldgerät FD X aus FIG. 1d wird deshalb in FIG. 1e als Feldgerät FD D bezeichnet.

Voraussetzung für die Konfiguration ist, dass der Konfigurationsanbieter CP Konfigurationsdaten der Feldgeräte FD A bis FD D und FD F im Prozessleitsystem 1 vorhält. Der Konfigurationsanbieter CP ruft dafür die jeweiligen Konfigurationsdaten von den Feldgeräten des Prozessleitsystems 1 automatisch ab.

FIG. 2 zeigt ein vereinfachtes Zustandsdiagramm eines Konfigurationsanbieters CP.

Die Schritte des erfindungsgemäßen Verfahrens werden in aufeinanderfolgende Zustände ("States", Präfix S2xx) eingruppiert und im Kontext dieser Zustände beschrieben. Üblicherweise folgt auf einen ersten Zustand genau ein zweiter Zustand. Bei Alternativen wird der zweite Zustand in Abhängigkeit von der Erfüllung einer Bedingung ("Conditionals", Präfix C2xx) aus einer begrenzten Anzahl vorbestimmter Zustände ausgewählt. Eine Ausnahme zu der obigen Regel bildet der Zustand S204. In diesem findet eine echte Verzweigung statt. Auf Zustand S204 folgen somit die Zustände S205 und S207 in einem im Wesentlichen parallelen und fortan voneinander unabhängigen Ablauf.

In einem Initialzustand S201 ist der Konfigurationsanbieter CP auf dem Gastgebersystem (z.B. dem Feldgerät FD E oder einem Gateway) deaktiviert.

Auf den deaktivierten Zustand S201 folgt eine Aktivierung S202 des Konfigurationsanbieters CP. Der Übergang zwischen den Zuständen S201, S202 erfolgt, wenn der Konfigurationsanbieter CP beispielsweise manuell oder durch eine übergeordnete Steuerung aktiviert wird.

Auf die Aktivierung S202 folgt eine Initialisierung S203. Im Rahmen der Initialisierung S203 wird eine erste Liste mit bekannten Feldgeräten L1 geladen. Die erste Liste L1 kann zuvor in einem persistenten Speicher gespeichert sein.

Auf die Initialisierung S203 folgt eine Bakenaktivierung S204. Mit der Bakenaktivierung S204 wird ein wiederkehrender Anbieter-verfügbar-Rundruf S205 aktiviert.

Der wiederkehrende Anbieter-verfügbar-Rundruf S205 umfasst ein wiederkehrendes Senden einer Bekanntmachungsnachricht paBDOB (Provider Available Bürkert Data Objekt Broadcast) von dem Konfigurationsanbieter CP an die Feldgeräte FD A bis FD X des Prozessleitsystems 1, um den Konfigurationsanbieter CP bei den Feldgeräten FD A bis FD X bekannt zu machen. Die Bekanntmachungsnachricht paBDOB ist eine Nachricht an alle Feldgeräte, eine sogenannte Broadcastnachricht. Die Zeitspanne zwischen zwei aufeinander folgenden Bekanntmachungsnachrichten paBDOB kann sinnvollerweise zwischen etwa eine Sekunde und etwa eine Stunde betragen. Vorteilhaft beträgt die Zeitspanne zwischen zwei aufeinander folgenden Bekanntmachungsnachrichten paBDOB etwa fünf Sekunden bis etwa fünf Minuten, insbesondere ca. zehn bis vierzig Sekunden, bzw. zwanzig bis dreißig Sekunden. Der wiederkehrende Anbieter-verfügbar-Rundruf S205 wird solange durchgeführt, wie der Konfigurationsanbieter CP aktiviert ist.

Im Zuge der Bakenaktivierung S204, nach dem erstmaligen Versenden des Anbieter-verfügbar-Rundrufs S205, kann optional das Senden einer Registrierungsanforderung rBDOB (Retrigger Bürkert Data Object Broadcast) von dem Konfigurationsanbieter CP an die Feldgeräte FD A bis FD X erfolgen, um eine Registrierung aller Feldgeräte FD A bis FD X beim Konfigurationsanbieter CP auszulösen. Die Registrierungsanforderung rBDOB ist eine Nachricht an alle Feldgeräte, eine sogenannte Broadcastnachricht. Durch das Aussenden der Registrierungsanforderung rBDOB kann sichergestellt werden, dass die Informationen bezüglich der Feldgeräte FDA bis FD X im Prozessleitsystem 1 (insbesondere die zweite Liste L2) des Konfigurationsanbieters CP auch dann konsistent sind, wenn der Konfigurationsanbieter CP beispielsweise neu gestartet wurde. In diesem Fall würden sich ansonsten ohne die optionale Registrierungsanforderung rDBOB solche Feldgeräte, die sich bereits beim Konfigurationsanbieter CP vor dessen Neustart registriert hatten, nicht erneut registrieren. Die zweite Liste L2 wäre dann ohne die Registrierungsanforderung rBDOB möglicherweise unvollständig.

Auf die Bakenaktivierung S204 folgt ein Abwarte- und Registrierungszyklus S207. Im Abwarte- und Registrierungszyklus S207 wartet der Konfigurationsanbieter CP (insbesondere eine definierte Zeitspanne) darauf, dass sich die Feldgeräte FD A bis FD X in Antwort auf eine Bekanntmachungsnachricht paBDOB mit einer Registrierungsnachricht rMSG beim Konfigurationsanbieter CP registrieren. Die definierte Zeitspanne kann vorteilhaft gleich oder kürzer sein als die Zeitspanne zwischen zwei aufeinander folgende Bekanntmachungsnachrichten paBDOB.

Solange sich im Abwarte- und Registrierungszyklus S207 keine neuen Feldgeräte FD A bis FD X bei dem Konfigurationsanbieter CP registrieren und keine Änderung ihrer Konfigurationsdaten bekannt machen (Bedingung C211), bleibt der Konfigurationsanbieter CP im Abwarte- und Registrierungszyklus S207, bzw. beginnt den Abwarte- und Registrierungszyklus S207 wiederkehrend erneut. Der Abwarte- und Registrierungszyklus S207 kann deshalb als ein Grundzustand des Konfigurationsanbieters CP angesehen werden. Zu oder vor Beginn des erstmals ablaufenden Abwarte- und Registrierungszyklus S207 wird eine zweite Liste L2 für Einträge mit den Identifikationsdaten aktiver Feldgeräte (leer) neu angelegt oder geleert. Feldgeräte FD A bis FD X, die sich während des Abwarte- und Registrierungszyklus S207 bei dem Konfigurationsanbieter CP registrieren, werden von dem Konfigurationsanbieter CP in die zweite Liste L2 mit den aktiven Feldgeräten eingepflegt. Es werden keine Feldgeräte mehrfach eingetragen, falls sie sich im Abwarte- und Registrierungszyklus S207 mehrfach melden.

Wenn sich im Abwarte- und Registrierungszyklus S207 (zumindest) ein neues Feldgerät FD F, FD X bei dem Konfigurationsanbieter CP registriert (Bedingung C212), wird eine Registrierungswiederauslösung S208 durchgeführt. Ein neues Feldgerät ist ein Feldgerät FD F, FD X, dessen Identifikationsdaten in der zweiten Liste L2 nicht verzeichnet sind. Das neue Feldgerät FD F, FD X (bzw. dessen Identifikationsdaten) werden dann in die zweite Liste L2 eingetragen. Die Registrierungswiederauslösung S208 umfasst das Senden einer Registrierungsanforderung rBDOB (Retrigger Bürkert Data Object Broadcast) von dem Konfigurationsanbieter CP an die Feldgeräte FD A bis FD X, um eine erneute Registrierung aller Feldgeräte FD A bis FD X beim Konfigurationsanbieter CP auszulösen. Die Registrierungsanforderung rBDOB ist eine Nachricht an alle Feldgeräte, eine sogenannte Broadcastnachricht.

Auf die Registrierungswiederauslösung S208 folgt ein weiterer Abwarte- und Registrierungszyklus S209. Der weitere Abwarte- und Registrierungszyklus S209 entspricht im Wesentlichen dem Abwarte- und Registrierungszyklus S207. Zu Beginn des weiteren Abwarte- und Registrierungszyklus S209 wird die zweite Liste L2 geleert oder alternativ (leer) neu erstellt. Im Anschluss wird die zweite Liste L2 mit den Identifikationsdaten der sich in Antwort auf die Registrierungsanforderung mit einer Registrierungsnachricht rMSG (ein Bürkert Data Object) beim Konfigurationsanbieter CP registrierenden Feldgeräten FD A bis FD X neu aufgebaut. Es werden in der zweiten Liste L2 Einträge mit den Identifikationsdaten der jeweiligen Feldgeräte erstellt. Es werden keine Feldgeräte mehrfach eingetragen, falls sie sich im weiteren Abwarte- und Registrierungszyklus S209 mehrfach melden. Durch den Neuaufbau der zweiten Liste L2 enthält die zweite Liste L2 keine Feldgeräte, die aus dem Prozessleitsystem 1 entfernt wurden und/oder nicht (mehr) aktiv sind.

Wenn eines der Feldgeräte FD A bis FD X dem Konfigurationsanbieter CP im Abwarte- und Registrierungszyklus S207 eine Änderung seiner Konfigurationsdaten mitgeteilt hat (Bedingung C213), oder wenn sich ein neues Feldgerät FD F, FD X bei dem Konfigurationsanbieter CP registriert hat (Bedingung C212), werden die erste Liste L1 und die zweite Liste L2 in einem Listenabgleich S210 miteinander verglichen.

Mittels des Listenabgleichs S210 werden vom Konfigurationsanbieter CP fehlende Feldgeräte (z.B. Feldgerät FD D in FIG. 1b und FIG. 1c), Austauschfeldgeräte (z.B. Feldgerät FD X in FIG. 1d), unbekannte Feldgeräte (z.B. Feldgerät FD F in FIG. 1b und FIG.1e) bzw. Feldgeräte mit geänderten Konfigurationsdaten, sowie bekannte Feldgeräte (z.B. Feldgeräte FD A bis FD C in FIG. 1a bis FIG. 1e) erkannt (Bedingungen C221 bis C224) und eine entsprechende Aktion S221 bis S224 für jedes der Feldgeräte (C241) durchgeführt.

Ein Feldgerät wird als neues Feldgerät erkannt (Bedingungen C212), wenn in der zweiten Liste L2 ein entsprechender Eintrag fehlt.

Ein Feldgerät wird als unbekanntes Feldgerät erkannt (Bedingung C222), wenn in der ersten Liste L1 ein entsprechender Eintrag fehlt. Zur sprachlichen Vereinfachung kann ein unbekanntes Feldgerät aber auch als neues Feldgerät bezeichnet werden.

Ein Feldgerät FD D wird als fehlendes Feldgerät erkannt (Bedingungen C223 und C224), wenn ein entsprechender Eintrag in der ersten Liste L1 vorhanden ist und in der zweiten Liste L2 fehlt.

Ein Feldgerät wird als Feldgerät mit geänderten Konfigurationsdaten erkannt (Bedingung C222), wenn das Feldgerät dem Konfigurationsanbieter eine Änderung der Konfigurationsdaten mitteilt, oder wenn der Konfigurationsanbieter eine Änderung der Konfigurationsdaten durch einen Vergleich vorgehaltener Konfigurationsdaten und aktueller Konfigurationsdaten des Feldgeräts erkennt.

Ein Feldgerät FD X wird als Austauschfeldgerät erkannt (Bedingung C223), wenn es ein neues Feldgerät ist und gleichzeitig ein kompatibles Feldgerät FD D derselben Geräteklasse (ein Feldgerät mit derselben Ident-Nummer) in dem Prozessleitsystem 1 fehlt. Zum Austausch S212 wird das Austauschfeldgerät FD X von dem Konfigurationsanbieter automatisch mit den Konfigurationsdaten des ersetzten Feldgeräts FD D konfiguriert. Der Eintrag des ersetzten Feldgeräts FD D in der ersten Liste L1 wird mit den Identifikationsdaten des Austauschfeldgeräts FD X aktualisiert. In dem entsprechenden Eintrag der Liste L1 wird die Serien-Nummer SNR des Feldgeräts FD D mit der Serien-Nummer SNR des Feldgeräts FD X überschrieben.

Wenn ein Feldgerät FD A bis FD C bereits bekannt ist und der Konfigurationsanbieter bereits zugehörige aktuelle Konfigurationsdaten vorhält (Bedingung C221), sendet der Konfigurationsanbieter CP dem Feldgerät eine Bestätigungsnachricht okMSG zur Bestätigung S214.

Wenn ein Feldgerät FD F ein unbekanntes Feldgerät aber kein Austauschfeldgerät ist oder geänderte Konfigurationsdaten aufweist (Bedingung C222), veranlasst der Konfigurationsanbieter eine Sicherung S211 der Konfigurationsdaten von dem Feldgerät. Es wird weiterhin ein Eintrag mit den Identifikationsdaten des Feldgeräts FD F in der ersten Liste L1 erstellt.

Wenn ein bekanntes Feldgerät fehlt, ohne, dass ein entsprechendes Austauschfeldgerät vorhanden ist (Bedingung C224), wird eine Wartungsmeldung ausgegeben S213. Die Wartungsmeldung kann über das Kommunikationssystem 2 oder über einen Signalgeber (Display, Farbanzeige, akustischer Signalgeber etc.) an dem entsprechenden Feldgerät ausgegeben werden. Die Wartungsmeldung kann nach NAMUR klassifiziert sein und beispielsweise die Wartungsmeldung durch eine blaue Farbanzeige signalisieren.

Wenn die Sicherung S211 oder der Austausch S212 fehlschlägt (Bedingung C232), wird eine Wartungsmeldung ausgegeben S213.

Wenn die Sicherung S211 oder der Austausch S212 erfolgreich durchgeführt wurde (Bedingung C231), sendet der Konfigurationsanbieter CP dem Feldgerät eine Bestätigungsnachricht okMSG zur Bestätigung S214.

Wenn der Konfigurationsanbieter CP den Abgleich der Listen L1, L2 für alle aktiven und/oder bekannten Feldgeräte durchgeführt hat (Bedingung C242), fällt der Konfigurationsanbieter nach der Bestätigung S214 in seinen Grundzustand, den Abwarte- und Registrierungszyklus S207, zurück.

In einer alternativen Ausführungsform (ohne Fig.) werden vom Konfigurationsanbieter CP keine bestehenden Einträge in der ersten Liste L1 verändert/überschrieben. Es werden vielmehr für alle Feldgeräte, die jemals mit dem Bussystem verbunden waren, Einträge mit den Identifikationsdaten und das zugehörige Backup (die Konfigurationsdaten) gespeichert. In diesem Fall können fehlende/entfernte Feldgeräte FD D im Prozessleitsystem 1 nicht durch den Vergleich der ersten Liste L1 mit der zweiten Liste L2 identifiziert werden. Es bietet sich somit an, die Erkennung fehlender Netzgeräte mittels entsprechender Heartbeat-Routinen durchzuführen.

FIG. 3 zeigt ein vereinfachtes Zustandsdiagramm eines Konfigurationsagenten (Client) eines Feldgeräts FD A bis FD X. Die Schritte des erfindungsgemäßen Verfahrens werden in aufeinanderfolgende Zustände ("States", Präfix S3xx) eingruppiert und im Kontext dieser Zustände beschrieben. Üblicherweise folgt auf einen ersten Zustand genau ein zweiter Zustand. Bei Alternativen wird der zweite Zustand in Abhängigkeit von der Erfüllung einer Bedingung ("Conditionals", Präfix C3xx) aus einer begrenzten Anzahl vorbestimmter Zustände ausgewählt.

Zusammenfassend ist im Auslieferungszustand (Werkszustand, Default) jedes Feldgerät FD A bis FD X im Zustand "Client Auto" konfiguriert. In diesem Zustand zeigt das Feldgerät, wenn es in ein Prozessleitsystem integriert und über einen Bus 2 mit anderen Feldgeräten verbunden wird, die Meldung "kein Backup" an (z.B. NAMUR Farbe Blau) und wartet bis sich ein Konfigurationsanbieter CP meldet. Ein Konfigurationsanbieter CP der mit dem Bussystem 2 verbunden und aktiv ist, meldet sich in kurzen Abständen bei allen Feldgeräten FDA bis FD X, die mit dem Bussystem 2 verbunden sind. Hierfür sendet er einen Broadcast an alle Teilnehmer des Bussystems 2. Die Feldgeräte FD A bis FD X, die mit dem Bussystem 2 verbunden sind, registrieren sich beim Konfigurationsanbieter CP. Das heißt sie antworten mit ihrer Identifikation (IDNR und SNR) und warten anschließend eine vordefinierte Zeit auf eine vom Konfigurationsanbieter CP angestoßene Aktion. Zum einen umfassen die Aktionen das "Backup" der Konfigurationsdaten, also das Anfragen, Abrufen und Abspeichern der Konfigurationsdaten durch den Konfigurationsanbieter CP und das Bereitstellen der Konfigurationsdaten durch das Feldgerät FDA bis FD X selbst. Zum anderen umfassen diese Aktionen das "Einspielen" neuer/geänderter Konfigurationsdaten, also den Transfer von Konfigurationsdaten vom Konfigurationsanbieter CP an das Feldgerät FD X und das Verarbeiten/Abspeichern der übertragenen Konfigurationsdaten auf dem Feldgerät FD X. Findet innerhalb einer vorgegeben Zeit (Timeout) keine Aktion statt, wird am Feldgerät eine Wartungsmeldung (NAMUR Farbe Blau) angezeigt. Diesen Zustand kann das Feldgerät nicht ohne eine Benutzereingabe bzw. eine Wartung verlassen. Es wird deaktiviert. Das Feldgerät befindet sich dann im Zustand "Client off" und es muss eine Wartung stattfinden.

In einem Initialzustand S301 ist der Konfigurationsagent des Feldgeräts FDA bis FD X in einem Bereitschaftszustand S301.

Der Konfigurationsagent ist ausgebildet, im Bereitschaftszustand S301 Nachrichten, insbesondere (ungerichtete) Nachrichten an alle Feldgeräte, zu empfangen und auszuwerten. Empfängt der Konfigurationsagent im Bereitschaftszustand S301 eine Bekanntmachungsnachricht paBDOB von einem Konfigurationsanbieter CP (Bedingung C312), die anzeigt, dass der Konfigurationsagent CP im Prozessleitsystem 1 verfügbar ist, so wechselt der Konfigurationsagent in einen eingeschalteten Zustand S302. Solange der Konfigurationsagent noch keine Bekanntmachungsnachricht paBDOB empfangen hat (Bedingung C311), verbleibt er im Bereitschaftszustand S301.

Nach dem Einschalten S302, versucht der Konfigurationsagent, sich, bzw. das Feldgerät FD A bis FD X, bei dem Konfigurationsanbieter CP zu registrieren S303. Der Konfigurationsagent sendet dafür eine Registrierungsnachricht rMSG an den Konfigurationsanbieter CP.

Die Registrierungsnachricht rMSG umfasst Identifikationsdaten des Feldgeräts, insbesondere eine Ident-Nummer und eine Serien-Nummer.

Die Ident-Nummer ist ein Datenwert, der eine funktionsbasierte Geräteklasse des Feldgeräts beschreibt. In anderen Worten wird durch die Ident-Nummer eine Funktionalität (z.B. Mass-Flow-Controller MFC) des Feldgeräts beschrieben. Feldgeräte mit derselben Ident-Nummer sind in Bezug auf ihre Funktionalität im Prozessleitsystem 1 austauschbar. Feldgeräte mit gleicher Ident-Nummer sind dennoch nicht zwingend baugleich. In anderen Worten haben Geräte einer Geräteklasse alle die gleichen Grundfunktionen, können sich aber hinsichtlich der Geräte-Konfiguration (Software- oder Hardware-Konfiguration wie z. B. Firmware- und Softwareversion, Display, Wireless-Schnittstelle, bestimmte Anschlüsse, oder Gehäuse für bestimmte Schutzklassen usw.) unterscheiden. Die Seriennummer ist innerhalb einer Geräteklasse eindeutig. Die Identifikationsdaten können den Feldgeräten bereits bei der Produktion zugewiesen werden.

Die Identifikationsdaten können weitere Informationen umfassen, beispielsweise Software- und/oder Hardware-Versionen, ein Datum der letzten Konfigurationsänderung und/oder ein Hashwert der über die aktuellen Konfigurationsdaten des Feldgeräts gebildet wird.

Nach dem Registrierungsversuch S303 wartet der Konfigurationsagent eine vorbestimmte Zeitspanne auf eine Aktion des Konfigurationsanbieters CP. Wenn der Konfigurationsanbieter CP innerhalb der vorbestimmten Zeitspanne keine Aktion anstößt (Bedingung C324), stellt der Konfigurationsagent die Nichtverfügbarkeit des Konfigurationsanbieters CP fest, S306. Der Konfigurationsagent gibt in diesem Fall eine Wartungsmeldung aus, S308. Die Wartungsmeldung kann über das Kommunikationssystem 2 oder über einen Signalgeber (Display, Farbanzeige, akustischer Signalgeber etc.) an dem entsprechenden Feldgerät ausgegeben werden. Die Wartungsmeldung kann nach NAMUR klassifiziert sein und beispielsweise die Wartungsmeldung durch eine blaue Farbanzeige signalisieren.

Die Aktion kann das Auslösen einer Konfiguration S304 des Feldgerätes sein, wenn das Feldgerät ein Austauschfeldgerät FD X (Bedingung C223) ist (Bedingung C322).

Die Aktion kann das Auslösen einer Sicherung S305 der Konfigurationsdaten des Feldgeräts sein, wenn der Konfigurationsanbieter CP die Konfigurationsdaten noch nicht vorhält (Bedingung C323), wenn das Feldgerät für den Konfigurationsanbieter also ein unbekanntes Feldgerät (Bedingung C222) ist.

Wenn die Sicherung der Konfigurationsdaten S305 oder die Konfiguration des Feldgeräts S304 erfolgreich abgeschlossen wird (Bedingung C331), und der Konfigurationsanbieter CP dies mittels einer Bestätigungsnachricht okMSG bestätigt (Bedingung C342), wechselt der Konfigurationsagent in einen Grundzustand S309.

Die Aktion kann eine Übersendung einer Bestätigungsnachricht okMSG sein. Wenn der Konfigurationsanbieter CP bereits eine aktuelle Version der Konfigurationsdaten des Feldgeräts vorhält (Bedingung C321), sendet der Konfigurationsanbieter CP dem Konfigurationsagenten eine Bestätigungsnachricht okMSG, auf die der Konfigurationsagent wartet, S307. Wenn der Konfigurationsagent die Bestätigungsnachricht okMSG des Konfigurationsanbieters CP innerhalb einer vorbestimmten Zeitspanne empfängt (Bedingung C342), wechselt der Konfigurationsagent in den Grundzustand S309.

Wenn die Sicherung der Konfigurationsdaten S305 oder die Konfiguration des Feldgeräts S304 fehlschlägt (Bedingung C332), oder der Konfigurationsanbieter CP den erfolgreichen Abschluss der Sicherung S305 oder der Konfiguration S304 nicht rechtzeitig mit einer Bestätigungsnachricht okMSG bestätigt (Bedingung C341), gibt der Konfigurationsagent eine Wartungsmeldung aus, S308. Die Wartungsmeldung kann über das Kommunikationssystem 2 oder über einen Signalgeber (Display, Farbanzeige, akustischer Signalgeber etc.) an dem entsprechenden Feldgerät ausgegeben werden. Die Wartungsmeldung kann nach NAMUR klassifiziert sein und beispielsweise die Wartungsmeldung durch eine blaue Farbanzeige signalisieren.

Nachdem der Konfigurationsagent, bzw. das Feldgerät die Wartungsmeldung ausgeben hat, S308, deaktiviert sich der Konfigurationsagent selbsttätig. Der Konfigurationsagent ist dann abgeschaltet S311. Erst wenn der Konfigurationsagent wieder aktiviert wird, beispielsweise im Rahmen einer Wartung, wechselt er zurück in den Bereitschaftsmodus S301.

Im Grundzustand S309 ist der Konfigurationsagent eingerichtet, die Konfigurationsdaten des Feldgeräts auf Veränderungen zu überwachen, sowie eine Registrierungsanforderung rBDOB zu empfangen und auszuwerten.

Solange der Konfigurationsagent keine Registrierungsanforderung rBDOB von dem Konfigurationsanbieter empfängt oder eine Änderung der Konfigurationsdaten feststellt (Bedingung C351), verbleibt der Konfigurationsanbieter in dem Grundzustand S309.

Wenn der Konfigurationsagent eine Registrierungsanforderung rBDOB von dem Konfigurationsanbieter empfängt (Bedingung C352), wechselt der Konfigurationsagent vom Grundzustand S309 zurück zu dem Registrierungsversuch S303 und sendet eine Registrierungsnachricht rMSG an den Konfigurationsanbieter CP, um sich bei diesem zu registrieren.

Wenn der Konfigurationsagent eine Veränderung der Konfigurationsdaten des Feldgeräts (Bedingung C353), beispielsweise durch eine Neukonfiguration des Feldgeräts (z.B. am Feldgerät oder durch eine übergeordnete Steuerung), feststellt, S310, verlässt der Konfigurationsanbieter seinen Grundzustand S309 und springt erneut zum Registrierungsversuch S303, um das Feldgerät bei dem Konfigurationsanbieter CP mit den geänderten Konfigurationsdaten zu registrieren. Die Registrierung beim Konfigurationsanbieter CP geschieht durch eine Registrierungsnachricht rMSG. Die Registrierungsnachricht rMSG kann eine Information zu den geänderten Konfigurationsdaten des Feldgeräts umfassen.

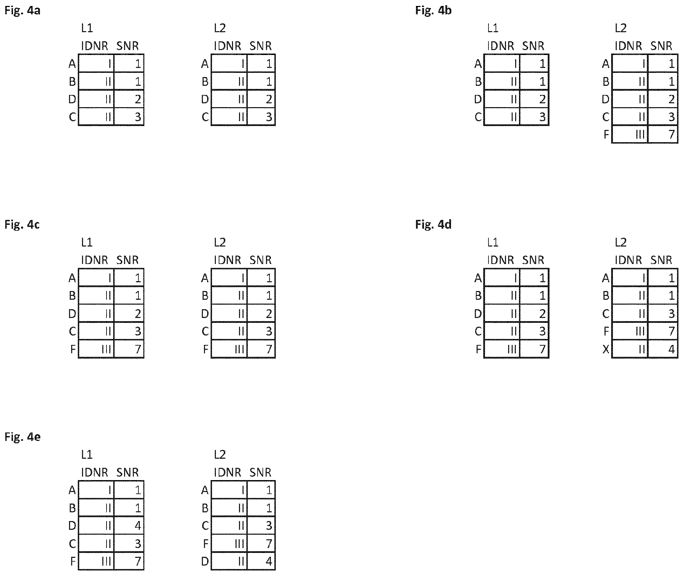

Die FIG. 4a bis FIG. 4e zeigen eine sequenzielle vereinfachte schematische Darstellung einer ersten Liste L1 und einer zweiten Liste L2 des Konfigurationsanbieters CP aus dem in den FIG. 1a bis FIG. 1e gezeigten Prozessleitsystem 1.

Dabei ist zu beachten, dass die FIG. 1a bis FIG. 1e die physischen Änderungen, also die Integration und die Entfernung von Feldgeräten FD F, FD D und FD X des Prozessleitsystems 1 darstellen, während in den FIG. 4a bis FIG. 4e die Zustände der ersten Liste L1 und der zweiten Liste L2 im Ablauf des erfindungsgemäßen Verfahrens gezeigt sind.

Die erste Liste L1 umfasst Einträge mit den Identifikationsdaten bekannter Feldgeräte und die zweiten Liste L2 umfasst Einträge mit den Identifikationsdaten aktiver Feldgeräte im Prozessleitsystem 1. Die Identifikationsdaten umfassen jeweils eine Ident-Nummer IDNR und eine Serien-Nummer SNR. Die Ident-Nummer IDNR bezeichnet eine Geräteklasse des Feldgeräts (z. B. Mass Flow Controller, MFC). Feldgeräte mit der gleichen Ident-Nummer IDNR sind grundsätzlich funktionell austauschbar. Um im Prozessleitsystem 1 tatsächlich dieselbe Funktion zu erfüllen, müssen die Feldgeräte dafür zusätzlich gleich konfiguriert sein. Dies gilt insbesondere für Austauschfeldgeräte FD X, also solche Feldgeräte, die als Ersatz für ein anderes (fehlendes) Feldgerät FD D in das Prozessleitsystem 1 integriert wurden. Die Serien-Nummer SNR ist innerhalb der jeweiligen Geräteklasse eindeutig (nur einmalig vergeben). Die Serien-Nummer SNR ist von einer "Hardware-Seriennummer" der Feldgeräte zu unterscheiden. Feldgeräte einer Geräteklasse haben alle die gleichen Grundfunktionen, können sich aber hinsichtlich der Geräte-Konfiguration (Software- oder Hardware-Konfiguration wie z. B. Firmware-, Softwareversion oder Gerät mit Display, Wireless-Schnittstelle, bestimmte Anschlüsse, oder Gehäuse für bestimmte Schutzklassen usw.) unterscheiden.

Zum besseren Verständnis sind die Feldgeräte FD A bis FD X des Prozessleitsystems 1 entsprechend ihrer Funktionalität A bis X bezeichnet. Die "funktionellen" Bezeichnungen A bis F dienen nur der Erläuterung. Das Feldgerät FDA hat die Ident-Nummer IDNR "I" und die Serien-Nummer SNR "1". Die Feldgeräte FD B, FD C und FD D sind alle Feldgeräte der gleichen Geräteklasse und haben die Ident-Nummer IDNR "II". Das Feldgerät FD B hat die Serien-Nummer SR "1", das Feldgerät FD D die Serien-Nummer SNR "2" und das Feldgerät FD C die Serien-Nummer SNR "3". Das Feldgerät FD F hat die Ident-Nummer IDNR "III" und die Serien-Nummer SNR "7". Das Feldgerät FD X hat die Ident-Nummer IDNR "II" und die Serien-Nummer SNR "4". Nachdem das Feldgerät FD X mit den Konfigurationsdaten des Feldgeräts FD D konfiguriert wurde, wird es entsprechend seiner Funktion als FD D bezeichnet.

Der Zustand der ersten und zweiten Liste L1, L2 in FIG. 4a entspricht dem in FIG. 1a gezeigten Zustand des Prozessleitsystems 1, wenn das erfindungsgemäße Verfahren durchlaufen wurde und sich der Konfigurationsanbieter CP wieder im Grundzustand S207 befindet. Die erste Liste L1 und die zweite Liste L2 weisen jeweils Einträge für die Feldgeräte FD A bis FD D auf.

Der Zustand der ersten und zweiten Liste L1, L2 in FIG. 4b entspricht dem in FIG. 1b gezeigten Zustand des Prozessleitsystems 1, wenn das erfindungsgemäße Verfahren teilweise durchlaufen und die zweite Liste L2 im weiteren Abwarte- und Registrierungszyklus S209 neu aufgebaut wurde. Die zweite Liste L2 weist Einträge für die Feldgeräte FD A bis FD F auf. Der Listenabgleich S210 ist noch nicht durchgeführt worden. Die erste Liste L1 ist deshalb noch nicht aktualisiert und weist Einträge für die Feldgeräte FD A bis FD D auf.

Zusammengefasst wurde in FIG. 1b ein neues Feldgerät FD F mit dem Bussystem verbunden. FD F befindet sich im Bereitschaftszustand S301 und wartet auf eine Bekanntmachungsnachricht paBDOB. Mit Empfang dieser Nachricht wechselt FD F in den Zustand "Client On" und registriert sich beim Konfigurationsanbieter CP indem es seine Identifikationsdaten (IDNR III / SNR 7) an den Konfigurationsanbieter CP sendet. CP trägt Geräteklasse "III" und Serien-Nummer "7" in die zweite Liste L2 mit aktiven Feldgeräten ein. In der ersten Liste L1 findet der Konfigurationsanbieter CP keinen für Geräteklasse "III" passenden Eintrag. FIG. 4b zeigt, dass der Konfigurationsanbieter CP noch kein Feldgerät der Geräteklasse "III" kennt. Für den Konfigurationsanbieter CP ist das Feldgerät FD F somit ein neues Feldgerät. Der Konfigurationsanbieter CP trägt nun das Tupel "III" und "7" für das neue Feldgerät in der ersten Liste L1 ein (FIG. 4c) und holt sich ein Backup ("Aktion" Backup) von FD F.

Der Zustand der ersten und zweiten Liste L1, L2 in FIG. 4c entspricht dem in FIG. 1b gezeigten Zustand des Prozessleitsystems 1, wenn das erfindungsgemäße Verfahren durchlaufen wurde und sich der Konfigurationsanbieter CP wieder im Grundzustand S207 befindet. Verfahrensgemäß wurde eine Sicherung S211 der Konfigurationsdaten vom neuen Feldgerät FD F durchgeführt. Die Identifikationsdaten des neuen Feldgeräts FD F wurden in der zweiten Liste L2 ergänzt. Die erste und die zweite Liste L1, L2 umfassen nun Einträge der Feldgeräte FD A bis FD F.

Der Zustand der ersten und zweiten Liste L1, L2 in FIG. 4c entspricht auch dem in FIG. 1c gezeigten Zustand des Prozessleitsystems 1. Der Konfigurationsanbieter CP befindet sich immer noch im Grundzustand S207. Die Entfernung des Feldgeräts FD D aus dem Prozessleitsystem 1 ist vom Konfigurationsanbieter CP noch nicht registriert worden. Es ist unmittelbar einleuchtend, dass ein Feldgerät nicht mehr mit dem Konfigurationsanbieter CP kommunizieren kann, wenn es beispielsweise defekt ist oder aus dem Prozessleitsystem 1 entfernt wurde. Das Feldgerät FD D kann deshalb seine Entfernung/Abwesenheit aus dem Prozessleitsystem nicht aktiv mitteilen. Lediglich aus dem Ausbleiben einer vom Konfigurationsanbieter CP erwarteten Nachricht des Feldgeräts FD D könnte der Konfigurationsanbieter CP auf die Abwesenheit/Nichtverfügbarkeit des Feldgeräts FD D schließen. Eine solche Überwachung ließe sich optional über eine Heartbeat-Funktion realisieren. Dafür müssten die Feldgeräte den Konfigurationsanbieter CP regelmäßig über ihre Betriebsbereitschaft benachrichtigen. Bliebe diese Benachrichtigung von einem der Feldgeräte aus, könnte der Konfigurationsanbieter CP daraus auf die Nichtverfügbarkeit (beispielsweise den Defekt oder die Abwesenheit) des entsprechenden Feldgeräts schließen. Im vorliegenden Fall ist die Nutzung einer solchen Heartbeat-Funktionalität zwar möglich, jedoch nicht zwingend erforderlich. Schließlich hat der Konfigurationsanbieter CP den Zweck, Austauschfeldgeräte automatisch zu konfigurieren. Für die Erkennung eines Feldgeräteaustauschs ist es jedoch ausreichend, wenn das fehlende Feldgerät FD D erst in Zusammenhang mit dem neuen Feldgerät FD X erkannt wird.

Der Zustand der ersten und zweiten Liste L1, L2 in FIG. 4d entspricht dem in FIG. 1 d gezeigten Zustand des Prozessleitsystems 1. Nachdem sich das Feldgerät FD X bei dem Konfigurationsanbieter CP registriert hat, erkannte dieser das Feldgerät FD X als neues Feldgerät und löste mit einer Registrierungsanforderung rBDOB eine Neuregistrierung S303 aller Feldgeräte FD A bis FD X beim Konfigurationsanbieter CP aus. Die zweite Liste L2 wurde dabei im weiteren Abwarte- und Registrierungszyklus S209 neu aufgebaut. Das entfernte Feldgerät FD D fehlt nun in der zweiten Liste L2, das neue Feldgerät FD X wurde in die zweite Liste L2 aufgenommen. Der Listenabgleich S210 ist noch nicht durchgeführt worden. Die erste Liste L1 ist deshalb noch nicht aktualisiert. Die erste Liste L1 umfasst Einträge für die Feldgeräte FD A bis FD F. Die zweite Liste L2 umfasst Einträge für die Feldgeräte FD A bis FD C, FD F und FD X.

Der Zustand der ersten und zweiten Liste L1, L2 in FIG. 4e entspricht dem in FIG. 1e gezeigten Zustand des Prozessleitsystems 1, wenn das erfindungsgemäße Verfahren durchlaufen wurde und sich der Konfigurationsanbieter CP wieder im Grundzustand S207 befindet. Beim Listenabgleich S210 wurde erkannt, dass das neue Feldgerät FD X und das fehlende Feldgerät FD D die gleiche Ident-Nummer IDNR haben und deshalb zur selben Geräteklasse II gehören. Das neue Feldgerät FD X wurde deshalb vom Konfigurationsanbieter CP automatisch mit den vorgehaltenen Konfigurationsdaten des fehlenden Feldgeräts FD D konfiguriert, S212/S304. Das neue Feldgerät FD X übernimmt nun die Funktion des Feldgeräts FD D vollständig und wird deshalb fortan als FD D bezeichnet. Der entsprechende Eintrag mit den Identifikationsdaten des fehlenden Feldgeräts FD D in Liste 1 wurde mit den Identifikationsdaten des Austauschfeldgeräts FD D ersetzt. Dabei wurde bei dem entsprechenden Eintrag insbesondere die Serien-Nummer SNR des Eintrags von "2" (die Serien-Nummer SNR des alten Feldgeräts FD D) auf "4" (die Serien-Nummer des neuen Feldgeräts FD D) geändert. Die erste Liste L1 und die zweite Liste L2 umfasst damit Einträge für die Feldgeräte FD A bis FD C, FD D und FD F.

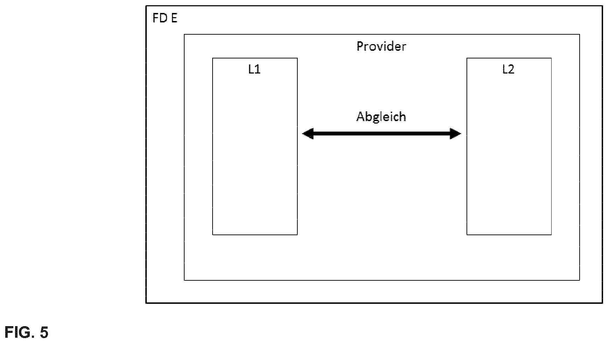

FIG. 5 zeigt eine vereinfachte schematische Darstellung eines Feldgeräts FD E. Das Feldgerät FD E ist als Konfigurationsanbieter CP ausgebildet. Das Feldgerät FD E weist entsprechende in Software implementierte Funktionen auf. Der Konfigurationsanbieter CP ist ausgebildet, eine erste Liste L1 und eine zweite Liste L2 vorzuhalten und zu pflegen. Der Konfigurationsanbieter CP ist ausgebildet, die erste Liste L1 und die zweite Liste L2 abzugleichen. Der Konfigurationsanbieter CP ist ausgebildet, entsprechende Konfigurationsdaten für die Feldgeräte in der ersten Liste L1 vorzuhalten. Der Konfigurationsanbieter CP ist ausgebildet, zusammen mit einem oder mehreren Feldgeräten FD A bis FD X das erfindungsgemäße Verfahren durchzuführen.

## Patentansprüche

1. Verfahren zur automatischen Konfiguration eines ersten Feldgeräts (FD X) in einem Prozessleitsystem (1), wobei das Prozessleitsystem ein oder mehrere Feldgeräte (FD A - FD X) und einen Konfigurationsanbieter (CP) umfasst, wobei der Konfigurationsanbieter (CP) ein Feldgerät (FD E) oder ein Gateway ist, wobei die Feldgeräte und der Konfigurationsanbieter über einen Feldbus (2) kommunizierend gekoppelt sind, das Verfahren umfassend die folgenden Schritte:
- S205: wiederkehrendes Senden einer Bekanntmachungsnachricht (paBDOB) von dem Konfigurationsanbieter (CP) an alle gekoppelten Feldgeräte (FD A - FD X), um den Konfigurationsanbieter bei den Feldgeräten bekannt zu machen, wobei die Bekanntmachungsnachricht (paBDOB) eine Broadcastnachricht ist,
- C312, S302: Wechseln eines Konfigurationsagenten der gekoppelten Feldgeräte (FD A - FD X) von einem Bereitschaftsmodus in einen aktiven Betrieb, nachdem die Bekanntmachungsnachricht (paBDOB) empfangen wurde,
- S303, S207: Registrieren der gekoppelten Feldgeräte bei dem Konfigurationsanbieter (CP) nach dem Wechsel in den aktiven Betrieb (S302), umfassend das Senden einer Nachricht mit Identifikationsdaten des jeweiligen Feldgerätes (rMSG) von den gekoppelten Feldgeräten an den Konfigurationsanbieter (CP),
- C212, S208: Senden einer Registrierungsanforderung (rBDOB) von dem Konfigurationsanbieter (CP) an die gekoppelten Feldgeräte (FD A - FD X), nachdem vom Konfigurationsanbieter ein neues Feldgerät (FD X) erkannt wurde, wobei die Registrierungsanforderung (rBDOB) eine Broadcastnachricht an alle Feldgeräte (FD A - FD X) ist, wobei ein neues Feldgerät (FD X) ein Feldgerät ist, das dem Konfigurationsanbieter (CP) eine Nachricht mit für den Konfigurationsanbieter (CP) zuvor unbekannten Identifikationsdaten des Feldgeräts (rMSG) gesendet hat,
- S211, S305: automatisches Abrufen und Vorhalten von Konfigurationsdaten der registrierten Feldgeräte durch den Konfigurationsanbieter,
- C223: automatisches Erkennen eines registrierten Feldgerätes (FD X) als ein erstes Feldgerät, durch den Konfigurationsanbieter, nachdem ein zweites Feldgerät (FD D) aus dem Prozessleitsystem entfernt und mit dem ersten Feldgerät (FD X) ersetzt wurde,
- S212, S304: automatisches Konfigurieren des ersten Feldgeräts (FD X) mit den vorgehaltenen Konfigurationsdaten des zweiten Feldgerätes (FD D) durch den Konfigurationsanbieter (CP).

2. Verfahren nach Anspruch 1, umfassend die folgenden Schritte:
- S207-S214: Vorhalten und Pflegen einer ersten Liste (L1) mit den Identifikationsdaten bekannter Feldgeräte (FD), wobei die bekannten Feldgeräte solche Feldgeräte sind, die bei dem Konfigurationsanbieter (CP) aktuell registriert sind und/oder in der Vergangenheit registriert waren, und
- S207-S214: Vorhalten und Pflegen von zu den bekannten Feldgeräten der ersten Liste zugehörigen Konfigurationsdaten,
wobei diese Schritte vor Schritt S205 erfolgen, wobei die Identifikationsdaten eine Ident-Nummer und eine Serien-Nummer (SNR) umfassen, wobei die Ident-Nummer einer funktionsabhängigen Geräteklasse des jeweiligen Feldgeräts entspricht, und wobei die Serien-Nummer innerhalb der jeweiligen Geräteklasse einmalig ist.

3. Verfahren nach Anspruch 2, wobei das Verfahren umfasst:
- S209: Vorhalten und Pflegen einer zweiten Liste (L2) mit Identifikationsdaten aktiver Feldgeräte (FD), wobei die aktiven Feldgeräte solche Feldgeräte sind, die bei dem Konfigurationsanbieter (CP) aktuell registriert sind, wobei Schritt S209 vor Schritt S303, S207 erfolgt.

4. Verfahren nach Anspruch 3, wobei das Verfahren im Anschluss an den in Anspruch 3 erläuterten Schritt umfasst:
- S209: Befüllen der zweiten Liste (L2) mit den Identifikationsdaten der sich beim Konfigurationsanbieter (CP) registrierenden Feldgeräte (FD).

5. Verfahren nach Anspruch 3 oder 4, wobei das Verfahren umfasst:
- S209: Neuanlegen oder Leeren der zweiten Liste (L2) vor dem Befüllen.

6. Verfahren nach einem der Ansprüche 3 bis 5, wobei das Verfahren einen oder mehrere, der folgenden vor Schritt C223 aus Anspruch 1 ablaufenden Schritte umfasst:
- S210: Vergleichen der ersten Liste (L1) mit der zweiten Liste (L2), um ein fehlendes Feldgerät (FD D) zu erkennen, wenn die zugehörigen Identifikationsdaten nur in der ersten Liste und nicht in der zweiten Liste vorhanden sind,
- S210: Vergleichen der zweiten Liste (L2) mit der ersten Liste (L1), um ein neues Feldgerät (FD F, FD X) zu erkennen, wenn die zugehörigen Identifikationsdaten nur in der zweiten Liste und nicht in der ersten Liste vorhanden sind, und
- C223: automatisches Erkennen eines neuen Feldgeräts (FD X) als das erste Feldgerät und eines fehlenden Feldgeräts (FD D) als das zweite Feldgerät, sofern das neue Feldgerät und das fehlende Feldgerät einer gemeinsamen Geräteklasse angehören und keine weiteren neuen Feldgeräte und/oder fehlenden Feldgeräte ebenfalls der gemeinsamen Geräteklasse angehören.

7. Verfahren nach einem der vorherigen Ansprüche, wobei das Verfahren in Schritt S212, S304 von Anspruch 1 einen oder mehrere, der folgenden Schritte umfasst:
- S212: Übertragen der von dem Konfigurationsanbieter (CP) vorgehaltenen Konfigurationsdaten des zweiten Feldgeräts (FD D) in das erste Feldgerät (FD X),
- S212: Konfigurieren des ersten Feldgeräts mit den an das erste Feldgerät übertragenen Konfigurationsdaten, und
- S212: Ersetzen der Identifikationsdaten des zweiten Feldgeräts in der ersten Liste (L1) mit den Identifikationsdaten des ersten Feldgeräts.

8. Verfahren nach einem der Ansprüche 3 bis 7, wobei das Verfahren einen oder mehrere, der folgenden Schritte umfasst:
- S305: Übertragen von Konfigurationsdaten von einem neuen Feldgerät (FD) an den Konfigurationsanbieter (CP), S310, S305: Übertragen von Konfigurationsdaten von einem Feldgerät an den Konfigurationsanbieter, nachdem die Konfigurationsdaten auf dem Feldgerät aktualisiert/geändert wurden,
- S211: Vorhalten der an den Konfigurationsanbieter übertragenen Konfigurationsdaten in einem lokalen Speicher des Konfigurationsanbieters oder in einem entfernten/verteilten Speicher, und
- Einfügen der Identifikationsdaten des neuen Feldgeräts in die erste Liste (L1).

9. Konfigurationsanbieter (CP) zur automatischen Konfiguration eines ersten Feldgeräts (FD X) in einem Prozessleitsystem (1) mit einem oder mehreren Feldgeräten (FD A bis FD X), wobei der Konfigurationsanbieter ausgebildet ist, um über ein Feldbus (2) mit den Feldgeräten kommunizierend gekoppelt zu werden, und wobei der Konfigurationsanbieter ausgebildet und mittels Softwareroutinen eingerichtet ist, um
- S211: automatisch Konfigurationsdaten von den gekoppelten Feldgeräten abzurufen und vorzuhalten,
- C223: automatisch ein erstes Feldgerät (FD X) zu erkennen, nachdem ein zweites Feldgerät (FD B) aus dem Prozessleitsystem entfernt und mit dem ersten Feldgerät ersetzt wurde,
- S212: automatisch das erste Feldgerät mit den vorgehaltenen Konfigurationsdaten des zweiten Feldgeräts zu konfigurieren,
**dadurch gekennzeichnet, dass** der Konfigurationsanbieter ein Feldgerät (FD E) oder ein Gateway ist und dass der Konfigurationsanbieter (CP) ausgebildet und mittels Softwareroutinen eingerichtet ist, um
- S205: wiederkehrend eine Bekanntmachungsnachricht (paBDOB) an alle gekoppelten Feldgeräte (FD A - FD X) zu senden, um sich bei den Feldgeräten bekannt zu machen, wobei die Bekanntmachungsnachricht eine Broadcastnachricht an alle gekoppelten Feldgeräte ist,
- S207: gekoppelte Feldgeräte zu registrieren, die sich bei dem Konfigurationsanbieter melden, indem die Feldgeräte jeweils eine Nachricht mit Identifikationsdaten des jeweiligen Feldgerätes (rMSG) an den Konfigurationsanbieter senden, und
- C212, S208: eine Registrierungsanforderung (rBDOB) an die gekoppelten Feldgeräte (FD A - FD X) zu senden, nachdem vom Konfigurationsanbieter ein neues Feldgerät (FD X) erkannt wurde, wobei die Registrierungsanforderung (rBDOB) eine Nachricht an alle Feldgeräte ist, und wobei ein neues Feldgerät (FD X) ein Feldgerät ist, das dem Konfigurationsanbieter (CP) eine Nachricht mit für den Konfigurationsanbieter (CP) zuvor unbekannten Identifikationsdaten des Feldgeräts (rMSG) gesendet hat.

10. Konfigurationsanbieter (CP) nach Anspruch 9, ausgebildet und mittels Softwareroutinen eingerichtet, um
- S207-S214: eine erste Liste (L1) mit Identifikationsdaten bekannter Feldgeräte vorzuhalten und zu pflegen, wobei die bekannten Feldgeräte solche Feldgeräte sind, die bei dem Konfigurationsanbieter aktuell registriert sind und/oder in der Vergangenheit registriert waren,
- wobei die Identifikationsdaten der Feldgeräte eine Ident-Nummer und eine Serien-Nummer (SNR) umfassen, wobei die Ident-Nummer einer funktionsabhängigen Geräteklasse des jeweiligen Feldgeräts entspricht, und wobei die Serien-Nummer innerhalb der jeweiligen Geräteklasse einmalig ist, und
- S211: zu den bekannten Feldgeräten der ersten Liste zugehörige Konfigurationsdaten vorzuhalten und zu pflegen, und
- S209: eine zweite Liste (L2) mit Identifikationsdaten aktiver Feldgeräte vorzuhalten und zu pflegen, wobei die aktiven Feldgeräte solche Feldgeräte sind, die bei dem Konfigurationsanbieter aktuell registriert sind, und
- S209: die zweite Liste mit den Identifikationsdaten der Feldgeräte zu füllen, die sich bei dem Konfigurationsanbieter registrieren, und
- S208: die zweite Liste neuanzulegen oder zu leeren, wenn die Feldgeräte mit einer Registrierungsanforderung aufgefordert wurden, sich bei dem Konfigurationsanbieter zu registrieren, und
- S210, C223: die erste Liste mit der zweiten Liste zu vergleichen, um ein fehlendes Feldgerät zu erkennen, wobei ein fehlendes Feldgerät ein Feldgerät ist, dessen Identifikationsdaten nur in der ersten Liste und nicht in der zweiten Liste vorhanden sind, und
- S210, C222, C223: die zweite Liste mit der ersten Liste zu vergleichen, um ein neues Feldgerät zu erkennen, wobei ein neues Feldgerät ein Feldgerät ist, dessen Identifikationsdaten nur in der zweiten Liste und nicht in der ersten Liste vorhanden sind, und
- C223: ein neues Feldgerät als das erste Feldgerät (FD A) und ein fehlendes Feldgerät als das zweite Feldgerät (FD B) zu erkennen, wenn die Zuordnung des neuen Feldgeräts zu dem neuen Feldgerät eindeutig ist, und
- S212: die vorgehaltenen Konfigurationsdaten des zweiten Feldgeräts in das erste Feldgerät zu übertragen, und
- S212: das erste Feldgerät mit den in das erste Feldgerät übertragenen Konfigurationsdaten zu konfigurieren, und
- S212: die Identifikationsdaten des zweiten Feldgeräts in der ersten Liste mit den Identifikationsdaten des ersten Feldgeräts zu ersetzen, und
- S211, C222: Konfigurationsdaten von einem Feldgerät abzurufen, wenn das Feldgerät ein neues Feldgerät ist und das neue Feldgerät kein fehlendes Feldgerät ersetzt, und
- S211: die abgerufenen Konfigurationsdaten in einem lokalen Speicher des Konfigurationsanbieters oder in einem entfernten/verteilten Speicher vorzuhalten, und
- S211: die Identifikationsdaten eines neuen Feldgeräts in die erste Liste einzufügen, und
- S211: den Identifikationsdaten in der ersten Liste die entsprechenden vorgehaltenen Konfigurationsdaten zuzuordnen.

## Claims

1. A method for the automatic configuration of a first field device (FD X) in a process control system (1), the process control system comprising one or more field devices (FD A - FD X) and a configuration provider (CP), the configuration provider (CP) being a field device (FD E) or a gateway, the field devices and the configuration provider being communicatively coupled via a fieldbus (2), the method comprising the following steps:
- S205: recurrently sending an introducing message (paBDOB) from the configuration provider (CP) to all coupled field devices (FD A - FD X) to introduce the configuration provider to the field devices, the introducing message (paBDOB) being a broadcast message,
- C312, S302: switching of a configuration agent of the coupled field devices (FD A - FD X) from a standby mode to an active operation upon reception of the introducing message (paBDOB),
- S303, S207: registering the coupled field devices with the configuration provider (CP) after switching to the active operation (S302), comprising sending a message with identification data of the respective field device (rMSG) from the coupled field devices to the configuration provider (CP),
- C212, S208: sending a registration request (rBDOB) from the configuration provider (CP) to the coupled field devices (FD A - FD X) after a new field device (FD X) was identified by the configuration provider, the registration request (rBDOB) being a broadcast message to all field devices (FD A - FD X), a new field device (FD X) being a field device that has sent to the configuration provider (CP) a message with identification data of the field device (rMSG) previously unknown to the configuration provider (CP),
- S211, S305: automatically retrieving and provisioning configuration data of the registered field devices by the configuration provider,
- C223: automatically recognizing a registered field device (FD X) as a first field device by the configuration provider after the removal of a second field device (FD D) from the process control system and the replacement with the first field device (FD X),
- S212, S304: automatically configuring the first field device (FD X) using the provisioned configuration data of the second field device (FD D) by the configuration provider (CP).

2. The method according to claim 1, comprising the following steps:
- S207-S214: provisioning and maintaining a first list (L1) of identification data of known field devices (FD), the known field devices being such field devices which are currently registered and/or were in the past registered with the configuration provider (CP), and
- S207-S214: provisioning and maintaining configuration data which belong to the known field devices of the first list,
these steps being performed before step S205, the identification data comprising an ident number and a serial number (SNR), the ident number corresponding to a function-dependent device class of the respective field device, and the serial number being nonrecurring within the respective device class.

3. The method according to claim 2, the method comprising:
- S209: provisioning and maintaining a second list (L2) of identification data of active field devices (FD), the active field devices being such field devices which are currently registered with the configuration provider (CP), with step S209 being effected before step S303, S207.

4. The method according to claim 3, wherein, subsequent to the step set forth in claim 3, the method comprises:
- S209: filling the second list (L2) with the identification data of the field devices (FD) registering with the configuration provider (CP).

5. The method according to claim 3 or 4, the method comprising:
- S209: recompiling or emptying the second list (L2) before filling.

6. The method according to any of claims 3 to 5, the method comprising one or more of the following steps proceeding before step C223 from claim 1:
- S210: comparing the first list (L1) with the second list (L2) to identify a missing field device (FD D) if the associated identification data is present only in the first list and not in the second list,
- S210: comparing the second list (L2) with the first list (L1) to identify a new field device (FD F, FD X) if the associated identification data is present only in the second list and not in the first list, and
- C223: automatically identifying a new field device (FD X) as the first field device and a missing field device (FD D) as the second field device, provided that the new field device and the missing field device belong to a common device class and no further new field devices and/or missing field devices also belong to the common device class.

7. The method according to any of the preceding claims, the method comprising one or more of the following steps in step S212, S304 of claim 1:
- S212: transmitting the configuration data of the second field device (FD D) provisioned by the configuration provider (CP) to the first field device (FD X),
- S212: configuring the first field device using the configuration data transmitted to the first field device, and
- S212: replacing the identification data of the second field device in the first list (L1) with the identification data of the first field device.

8. The method according to any of claims 3 to 7, the method comprising one or more of the following steps:
- S305: transmitting configuration data from a new field device (FD) to the configuration provider (CP), S310, S305: transmitting configuration data from a field device to the configuration provider after the update/change of the configuration data on the field device,
- S211: provisioning the configuration data transmitted to the configuration provider in a local storage of the configuration provider or in a remote/distributed storage, and
- inserting the identification data of the new field device into the first list (L1).

9. A configuration provider (CP) for the automatic configuration of a first field device (FD X) in a process control system (1) having one or more field devices (FD A to FD X), the configuration provider being designed to be communicatively coupled to the field devices via a fieldbus (2), and the configuration provider being designed and configured, by means of software routines, to
- S211: automatically retrieve and provision configuration data from the coupled field devices,
- C223: automatically recognize a first field device (FD X) after the removal of a second field device (FD B) from the process control system and the replacement with the first field device,
- S212: automatically configure the first field device using the provisioned configuration data of the second field device,
**characterized in that** the configuration provider is a field device (FD E) or a gateway, and **in that** the configuration provider (CP) is designed and configured, by means of software routines, to
- S205: recurrently send an introducing message (paBDOB) to all coupled field devices (FD A - FD X) to introduce itself to the field devices, the introducing message being a broadcast message to all coupled field devices,
- S207: register coupled field devices which answer the configuration provider by the field devices each sending a message with identification data of the respective field device (rMSG) to the configuration provider, and
- C212, S208: send a registration request (rBDOB) to the coupled field devices (FD A - FD X) after a new field device (FD X) was identified by the configuration provider, the registration request (rBDOB) being a message to all field devices, and a new field device (FD X) being a field device that has sent to the configuration provider (CP) a message with identification data of the field device (rMSG) previously unknown to the configuration provider (CP).

10. The configuration provider (CP) according to claim 9, designed and configured, by means of software routines, to
- S207-S214: provision and maintain a first list (L1) of identification data of known field devices, the known field devices being such field devices which are currently registered and/or were in the past registered with the configuration provider,
- the identification data of the field devices comprising an ident number and a serial number (SNR), the ident number corresponding to a function-dependent device class of the respective field device, and the serial number being nonrecurring within the respective device class, and
- S211: provision and maintain configuration data belonging to the known field devices of the first list, and
- S209: provision and maintain a second list (L2) of identification data of active field devices, the active field devices being such field devices which are currently registered with the configuration provider, and
- S209: fill the second list with the identification data of the field devices which register with the configuration provider, and
- S208: recompile or empty the second list if the field devices were requested by a registration request to register with the configuration provider, and
- S210, C223: compare the first list with the second list to recognize a missing field device, a missing field device being a field device the identification data of which is present only in the first list and not in the second list, and
- S210, C222, C223: compare the second list with the first list to recognize a new field device, a new field device being a field device the identification data of which is present only in the second list and not in the first list, and
- C223: recognize a new field device as the first field device (FD A) and a missing field device as the second field device (FD B) if the assignment of the new field device to the new field device is unambiguous, and
- S212: transmit the provisioned configuration data of the second field device into the first field device, and
- S212: configure the first field device using the configuration data transmitted into the first field device, and
- S212: replace the identification data of the second field device in the first list with the identification data of the first field device, and
- S211, C222: retrieve configuration data from a field device if the field device is a new field device and the new field device does not replace a missing field device, and
- S211: provision the retrieved configuration data in a local storage of the configuration provider or in a remote/distributed storage, and
- S211: insert the identification data of a new field device into the first list, and
- S211: assign the corresponding provisioned configuration data to the identification data in the first list.

## Revendications

1. Procédé de configuration automatique d'un premier appareil de terrain (FD X) dans un système de contrôle de processus (1), le système de contrôle de processus comprenant un ou plusieurs appareils de terrain (FD A - FD X) et un fournisseur de configuration (CP), le fournisseur de configuration (CP) étant un appareil de terrain (FD E) ou une passerelle, les appareils de terrain et le fournisseur de configuration étant couplés de manière communicative par un bus de terrain (2), le procédé comprenant les étapes suivantes :
- S205 : l'envoi récurrent d'un message d'annonce (paBDOB) du fournisseur de configuration (CP) à tous les appareils de terrain couplés (FD A - FD X) pour faire connaître le fournisseur de configuration aux appareils de terrain, le message d'annonce (paBDOB) étant un message de diffusion,
- C312, S302 : le changement d'un agent de configuration des appareils de terrain couplés (FD A - FD X) d'un mode d'attente à un mode actif après la réception du message d'annonce (paBDOB),
- S303, S207 : l'enregistrement des appareils de terrain couplés auprès du fournisseur de configuration (CP) après le passage en mode actif (S302), comprenant l'envoi d'un message avec des données d'identification de l'appareil de terrain respectif (rMSG) depuis les appareils de terrain couplés vers le fournisseur de configuration (CP),
- C212, S208: l'envoi d'une demande d'enregistrement (rBDOB) du fournisseur de configuration (CP) aux appareils de terrain couplés (FD A - FD X) après la détection d'un nouvel appareil de terrain (FD X) par le fournisseur de configuration, la demande d'enregistrement (rBDOB) étant un message de diffusion à tous les appareils de terrain (FD A - FD X), un nouvel appareil de terrain (FD X) étant un appareil de terrain qui a envoyé un message avec des données d'identification de l'appareil de terrain (rMSG) précédemment inconnu du fournisseur de configuration (CP) au fournisseur de configuration (CP),
- S211, S305 : la récupération et la tenue à disposition automatique de données de configuration des appareils de terrain enregistrés par le fournisseur de configuration,
- C223 : la reconnaissance automatique d'un appareil de terrain enregistré (FD X) en tant que premier appareil de terrain par le fournisseur de configuration après le retrait d"un deuxième appareil de terrain (FD D) du système de contrôle de processus et le remplacement par le premier appareil de terrain (FD X),
- S212, S304 : la configuration automatique du premier appareil de terrain (FD X) avec les données de configuration tenues à disposition du deuxième appareil de terrain (FD D) par le fournisseur de configuration (CP).

2. Procédé selon la revendication 1, comprenant les étapes suivantes :
- S207-S214 : la tenue à disposition et la maintenance d'une première liste (L1) des données d'identification d'appareils de terrain connus (FD), les appareils de terrain connus étant des appareils de terrain qui sont actuellement enregistrés et/ou ont étaient enregistrés dans le passé auprès du fournisseur de configuration (CP), et
- S207-S214 : la tenue à disposition et la maintenance de données de configuration associées aux appareils de terrain connus de la première liste,
ces étapes étant réalisées avant l'étape S205, les données d'identification comprenant un numéro d'identification et un numéro de série (SNR), le numéro d'identification correspondant à une classe d'appareils dépendant de la fonction de l'appareil de terrain respectif, et le numéro de série étant unique dans la classe d'appareils respective.

3. Procédé selon la revendication 2, le procédé comprenant :
- S209 : la tenue à disposition et la maintenance d'une deuxième liste (L2) de données d'identification d'appareils de terrain actifs (FD), les appareils de terrain actifs étant des appareils de terrain qui sont actuellement enregistrés auprès du fournisseur de configuration (CP), l'étape S209 étant réalisée avant les étapes S303, S207.

4. Procédé selon la revendication 3, le procédé comprenant après l'étape expliquée dans la revendication 3 :
- S209 : le remplissage de la deuxième liste (L2) avec les données d'identification des appareils de terrain (FD) s'enregistrant auprès du fournisseur de configuration (CP).

5. Procédé selon la revendication 3 ou 4, le procédé comprenant :
- S209 : la re-création ou le vidage de la deuxième liste (L2) avant le remplissage.

6. Procédé selon l'une des revendications 3 à 5, le procédé comprenant une ou plusieurs des étapes suivantes se déroulant avant l'étape C223 de la revendication 1 :
- S210 : la comparaison de la première liste (L1) avec la deuxième liste (L2) pour détecter un appareil de terrain (FD D) manquant lorsque les données d'identification associées sont présentes uniquement dans la première liste et non dans la deuxième liste,
- S210 : la comparaison de la deuxième liste (L2) avec la première liste (L1) pour détecter un nouvel appareil de terrain (FD F, FD X) lorsque les données d'identification associées sont présentes uniquement dans la deuxième liste et non dans la première liste, et
- C223 : la reconnaissance automatique d'un nouvel appareil de terrain (FD X) comme premier appareil de terrain et d'un appareil de terrain manquant (FD D) comme deuxième appareil de terrain, à condition que le nouvel appareil de terrain et l'appareil de terrain manquant appartiennent à une classe d'appareils commune et qu'aucun nouvel appareil de terrain supplémentaire et/ou appareil de terrain manquant n'appartienne également à la classe d'appareils commune.

7. Procédé selon l'une des revendications précédentes, le procédé comprenant à l'étape S212, S304 de la revendication 1 une ou plusieurs des étapes suivantes :
- S212 : la transmission des données de configuration du deuxième appareil de terrain (FD D) tenues à disposition par le fournisseur de configuration (CP) au premier appareil de terrain (FD X),
- S212 : la configuration du premier appareil de terrain avec les données de configuration transmises au premier appareil de terrain, et
- S212 : le remplacement des données d'identification du deuxième appareil de terrain dans la première liste (L1) par les données d'identification du premier appareil de terrain.

8. Procédé selon l'une des revendications 3 à 7, le procédé comprenant l'une ou plusieurs des étapes suivantes :
- S305 : la transmission de données de configuration d'un nouvel appareil de terrain (FD) au fournisseur de configuration (CP), S310, S305 : la transmission de données de configuration d'un appareil de terrain au fournisseur de configuration après l'actualisation/le changement des données de configuration sur l'appareil de terrain,
- S211 : la tenue à disposition des données de configuration transmises au fournisseur de configuration dans une mémoire locale du fournisseur de configuration ou dans une mémoire distante/distribuée, et
- le rajout des données d'identification du nouvel appareil de terrain dans la première liste (L1).

9. Fournisseur de configuration (CP) pour la configuration automatique d'un premier appareil de terrain (FD X) dans un système de contrôle de processus (1) comprenant un ou plusieurs appareils de terrain (FD A à FD X), le fournisseur de configuration étant réalisé de manière à être couplé de manière communicative aux appareils de terrain par un bus de terrain (2), et le fournisseur de configuration étant réalisé et aménagé au moyen de routines logicielles de manière à
- S211 : automatiquement récupérer et tenir à disposition des données de configuration des appareils de terrain couplés,
- C223 : détecter automatiquement un premier appareil de terrain (FD X) après le retrait d'un deuxième appareil de terrain (FD B) du système de contrôle de processus et le remplacement de celui-ci par le premier appareil de terrain,
- S212 : configurer automatiquement le premier appareil de terrain avec les données de configuration tenues à disposition du deuxième appareil de terrain,
**caractérisé en ce que** le fournisseur de configuration est un appareil de terrain (FD E) ou une passerelle, et **en ce que** le fournisseur de configuration (CP) est réalisé et aménagé au moyen de routines logicielles de manière à
- S205 : envoyer de manière récurrente un message d'annonce (paBDOB) à tous les appareils de terrain couplés (FD A - FD X) pour se faire connaître des appareils de terrain, le message d'annonce étant un message de diffusion à tous les appareils de terrain couplés,
- S207 : enregistrer des appareils de terrain couplés qui s'annoncent au fournisseur de configuration par l'envoi d'un message avec des données d'identification de l'appareil de terrain respectif (rMSG) au fournisseur de configuration par chaque appareil de terrain, et
- C212, S208: envoyer une demande d'enregistrement (rBDOB) aux appareils de terrain couplés (FD A - FD X) après la détection d'un nouvel appareil de terrain (FD X) par le fournisseur de configuration, la demande d'enregistrement (rBDOB) étant un message à tous les appareils de terrain, et un nouvel appareil de terrain (FD X) étant un appareil de terrain qui a envoyé un message au fournisseur de configuration (CP) avec des données d'identification de l'appareil de terrain (rMSG) précédemment inconnues du fournisseur de configuration (CP).

10. Fournisseur de configuration (CP) selon la revendication 9, réalisé et aménagé au moyen de routines logicielles de manière à
- S207-S214 : tenir à disposition et maintenir une première liste (L1) de données d'identification d'appareils de terrain connus, les appareils de terrain connus étant des appareils de terrain qui sont actuellement enregistrés et/ou qui étaient enregistrés dans le passé auprès du fournisseur de configuration,
- les données d'identification des appareils de terrain comprenant un numéro d'identification et un numéro de série (SNR), le numéro d'identification correspondant à une classe d'appareils dépendant de la fonction de l'appareil de terrain respectif, et le numéro de série étant unique dans la classe d'appareils respective, et
- S211 : tenir à disposition et maintenir des données de configuration associées aux appareils de terrain connus de la première liste, et
- S209 : tenir à disposition et maintenir une deuxième liste (L2) de données d'identification d'appareils de terrain actifs, les appareils de terrain actifs étant des appareils de terrain qui sont actuellement enregistrés auprès du fournisseur de configuration, et
- S209 : remplir la deuxième liste avec les données d'identification des appareils de terrain s'enregistrant auprès du fournisseur de configuration, et
- S208 : recréer ou vider la deuxième liste lorsque les appareils de terrain ont été invités par une demande d'enregistrement à s'enregistrer auprès du fournisseur de configuration, et
- S210, C223 : comparer la première liste avec la deuxième liste pour détecter un appareil de terrain manquant, un appareil de terrain manquant étant un appareil de terrain dont les données d'identification sont présentes uniquement dans la première liste et non dans la deuxième liste ; et
- S210, C222, C223 : comparer la deuxième liste avec la première liste pour détecter un nouvel appareil de terrain, un nouvel appareil de terrain étant un appareil de terrain dont les données d'identification sont présentes uniquement dans la deuxième liste et non dans la première liste, et
- C223 : reconnaître un nouvel appareil de terrain comme premier appareil de terrain (FD A) et un appareil de terrain manquant comme deuxième appareil de terrain (FD B) lorsque l'association du nouvel appareil de terrain au nouvel appareil de terrain est univoque, et
- S212 : transmettre les données de configuration tenues à disposition du deuxième appareil de terrain au premier appareil de terrain, et
- S212 : configurer le premier appareil de terrain avec les données de configuration transmises au premier appareil de terrain, et
- S212 : remplacer les données d'identification du deuxième appareil de terrain dans la première liste par les données d'identification du premier appareil de terrain, et
- S211, C222 : récupérer les données de configuration d'un appareil de terrain lorsque l'appareil de terrain est un nouvel appareil de terrain et le nouvel appareil de terrain ne remplace pas un appareil de terrain manquant ; et
- S211 : tenir à disposition les données de configuration récupérées dans une mémoire locale du fournisseur de configuration ou dans une mémoire distante/distribuée, et
- S211 : ajouter les données d'identification d'un nouvel appareil de terrain à la première liste, et
- S211 : associer les données d'identification de la première liste aux données de configuration tenues à disposition correspondantes.
